# EUROPÄISCHE PATENTSCHRIFT

(11) **EP 1 049 376 B1**
(45) Veröffentlichungstag und Bekanntmachung des Hinweises auf die Patenterteilung: **16.10.2002**
(21) Anmeldenummer: 99906118.7
(22) Anmeldetag: 12.01.1999
(51) Int. Cl.: A01N 47/38

(54) **SELEKTIVE HERBIZIDE AUF BASIS VON N-ARYL-TRIAZOLIN(THI)ONEN UND N-ARYLSULFONYLAMINO(THIO)CARBONYL-TRIAZOLIN(THI)ONEN**
SELECTIVE HERBICIDES BASED ON N-ARYL- TRIAZOLINE(THI)ONS AND N-ARLYSULFONYLAMINO (THIO)CARBONYL- TRIAZOLINE(THI) ONS
HERBICIDES SELECTIFS A BASE DE N-ARYL- TRIAZOLIN(THI)ONES ET DE N-ARYLSULFONYLAMINO (THIO)CARBONYL- TRIAZOLIN(THI) ONES

(30) Priorität: 24.01.1998 DE 19802697
(43) Veröffentlichungstag der Anmeldung: 08.11.2000
(73) Patentinhaber: Bayer Aktiengesellschaft, 51368 Leverkusen (DE)
(72) Erfinder: DOLLINGER, Markus, Overland Park, KS 66213 (US); DREWES, Mark, Wilhelm, D-40764 Langenfeld (DE); HAAS, Wilhelm, D-50259 Pulheim (DE); MÜLLER, Klaus-Helmut, D-40593 Düsseldorf (DE)
(86) Internationale Anmeldenummer: EP9900130
(87) Internationale Veröffentlichungsnummer: WO99037153

(56) Entgegenhaltungen:
- WO-A-98/12923

## Beschreibung

Die Erfindung betrifft neue herbizide, synergistische Wirkstoffkombinationen, die bekannte N-Aryl-triazolin(thi)one einerseits und bekannte N-Arylsulfonylamino(thio)-carbonyl-triazolin(thi)one andererseits umfassen und mit besonders gutem Erfolg zur selektiven Unkrautbekämpfung in verschiedenen Nutzpflanzenkulturen verwendet werden können.

N-Aryl-triazolin(thi)one sind als herbizid wirksame Stoffe Gegenstand einer Reihe von Patentanmeldungen (vgl. DE-A-3024316, DE-A-3514057, DE-A-3636318, EP-A-220952, EP-A-370332, EP-A-597360, EP-A-609734, US-A-4702763, US-A-4806145, US-A-4818275, US-A-4906284, US-A-4909831, US-A-5035740, US-A-5041155, WO-A-8501637, WO-A-8504307, WO-A-8602642, WO-A-8604481, WO-A-8700730, WO-A-8703782, WO-A-8809617, WO-A-9002120, WO-A-9530661).

N-Arylsulfonylamino(thio)carbonyl-triazolin(thi)one sind ebenfalls als herbizid wirksame Stoffe Gegenstand einer Reihe von Patentanmeldungen (vgl. EP-A-341489, EP-A-422469, EP-A-425948, EP-A-431291, EP-A-507171, EP-A-534266, WO-A-9611188, WO-A-9627590, WO-A-9627591, WO-A-9703056).

Überraschenderweise wurde nun gefunden, daß eine Reihe von bekannten Wirkstoffen aus der Reihe der N-Aryl-triazolin(thi)one bei gemeinsamer Anwendung mit bekannten herbizid wirksamen Verbindungen aus der Reihe der N-Arylsulfonylamino(thio)carbonyl-triazolin(thi)one synergistische Effekte hinsichtlich der Wirkung gegen Unkräuter zeigen und besonders vorteilhaft als breit wirksame Kombinationspräparate zur selektiven Bekämpfung von Unkräutern in Nutzpflanzenkulturen, wie z.B. in Weizen, verwendet werden können.

Gegenstand der Erfindung sind selektiv-herbizide Mittel, gekennzeichnet durch einen wirksamen Gehalt an einer Wirkstoffkombination umfassend
(a) zumindest ein N-Aryl-triazolin(thi)on der allgemeinen Formel (I) 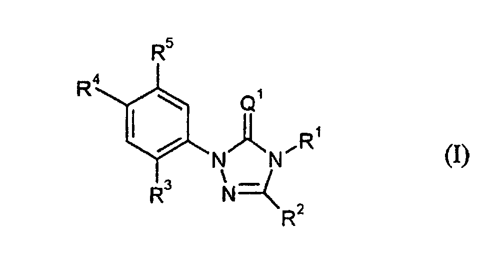 in welcher
   - Q¹: für Sauerstoff oder Schwefel steht,
   - R¹: für gegebenenfalls durch Halogen substituiertes Alkyl mit 1 bis 5 Kohlenstoffatomen steht,
   - R²: für gegebenenfalls durch Halogen substituiertes Alkyl mit 1 bis 5 Kohlenstoffatomen steht,
   - R³: für Wasserstoff oder Halogen steht,
   - R⁴: für Cyano, Thiocarbamoyl oder Halogen steht, und
   - R⁵: für Nitro, Cyano, Carboxy, Carbamoyl, Thiocarbamoyl, Hydroxy, Mercapto, Amino, Hydroxyamino, Aminosulfonyl, Halogen, für jeweils gegebenenfalls durch Cyano, Hydroxy, C₁-C₄-Alkoxy, C₁-C₄-Alkyl-carbonyl und/oder C₁-C₄-Alkoxy-carbonyl substituiertes Alkyl, Alkoxy, Alkylthio, Alkylsulfinyl, Alkylsulfonyl, Alkylcarbonyl, Alkoxycarbonyl oder Alkylamino mit jeweils 1 bis 6 Kohlenstoffatomen, für jeweils gegebenenfalls durch Cyano, Carboxy, Halogen und/oder C₁-C₄-Alkoxy-carbonyl substituiertes Alkenyl, Alkinyl, Alkenyloxy oder Alkinyloxy mit jeweils 2 bis 6 Kohlenstoffatomen, für jeweils gegebenenfalls durch Halogen substituiertes Alkylcarbonylamino, Alkoxycarbonylamino, Alkylsulfonylamino, N,N-Bis-alkylsulfonyl-amino oder N-Alkylcarbonyl-N-alkylsuIfonyl-amino mit jeweils 1 bis 6 Kohlenstoffatomen in den Alkylgruppen, oder für jeweils gegebenenfalls durch Cyano, Halogen, C₁-C₄-Alkyl, C₁-C₄-Halogenalkyl, C₁-C₄-Alkoxy oder C₁-C₄-Halogenalkoxy substituiertes N-Phenylcarbonyl-N-alkylsulfonyl-amino, N-Pyridylcarbonyl-N-alkylsulfonyl-amino, N-Furylcarbonyl-N-alkylsulfonyl-amino oder N-Thienylcarbonyl-N-alkylsulfonyl-amino mit jeweils 1 bis 6 Kohlenstoffatomen in den Alkylgruppen steht,
   ausgenommen der Wirkstoff 2-(2,4-Dichlor-5-methylsulfonyl-amino-phenyl)-4-difluormethyl-5-methyl-2,4-dihydro-3H-1,2,4-triazol-3-on (Sulfentrazone)
   ("Wirkstoffe der Gruppe 1") und
(b) zumindest ein N-Arylsulfonylamino(thio)carbonyl-triazolin(thi)on der allgemeinen Formel (II) 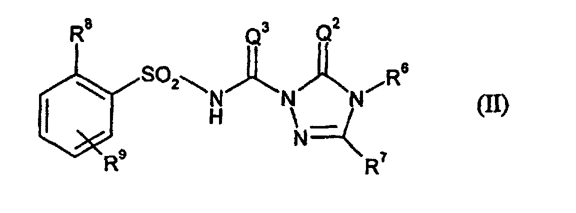 in welcher
   - Q² und Q³: jeweils für Sauerstoff oder Schwefel stehen,
   - R⁶: für jeweils gegebenenfalls durch Cyano, Halogen oder C₁-C₄-Alkoxy substituiertes Alkyl, Alkenyl, Alkinyl, Alkoxy, Alkenyloxy, Alkylamino oder Dialkylamino mit jeweils bis zu 6 Kohlenstoffatomen, oder für jeweils gegebenenfalls durch Cyano, Halogen oder C₁-C₄-Alkyl substituiertes Cycloalkyl, Cycloalkylalkyl oder Cycloalkylamino mit jeweils 3 bis 6 Kohlenstoffatomen in den Cycloalkylgruppen und gegebenenfalls 1 bis 4 Kohlenstoffatomen im Alkylteil steht,
   - R⁷: für Wasserstoff, für Halogen, für jeweils gegebenenfalls durch Cyano, Halogen oder C₁-C₄-Alkoxy substituiertes Alkyl, Alkoxy, Alkylthio, Alkylamino, Dialkylamino, Alkenyl, Alkinyl, Alkenyloxy, Alkinyloxy, Alkenylthio, Alkinylthio, Alkenylamino oder Alkinylamino mit jeweils bis zu 6 Kohlenstoffatomen, oder für jeweils gegebenenfalls durch Cyano, Halogen oder C₁-C₄-Alkyl substituiertes Cycloalkyl, Cycloalkyloxy, Cycloalkylthio, Cycloalkylamino oder Cycloalkylalkyl mit jeweils 3 bis 6 Kohlenstoffatomen in den Cycloalkylgruppen und gegebenenfalls 1 bis 4 Kohlenstoffatomen im Alkylteil steht,
   - R⁸: für Nitro, Cyano, Halogen, Phenyl, Phenoxy, für jeweils gegebenenfalls durch Cyano, Halogen oder C₁-C₄-Alkoxy substituiertes Alkyl, Alkylcarbonyl, Alkoxy, Alkoxycarbonyl, Alkylthio, Alkylsulfinyl, Alkylsulfonyl, Dialkylaminosulfonyl, Alkylamino, Alkenyl, Alkenyloxy, Alkenylthio, Alkenylamino, Alkinyl, Alkinyloxy, Alkinylthio mit jeweils bis zu 6 Kohlenstoffatomen, oder für jeweils gegebenenfalls durch Cyano, Halogen oder C₁-C₄-Alkyl substituiertes Cycloalkyl, Cycloalkyloxy, Cycloalkylthio, Cycloalkylamino mit jeweils 3 bis 6 Kohlenstoffatomen in den Cycloalkylgruppen steht, und
   - R⁹: fiir Wasserstoff, Nitro, Cyano, Halogen, Phenyl, Phenoxy, für jeweils gegebenenfalls durch Cyano, Halogen oder C₁-C₄-Alkoxy substituiertes substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy oder Alkinylthio mit jeweils bis zu 6 Kohlenstoffatomen, oder für jeweils gegebenenfalls durch Cyano, Halogen oder C₁-C₄-Alkyl substituiertes Cycloalkyl, Cycloalkyloxy, Cycloalkylthio, Cycloalkylamino mit jeweils 3 bis 6 Kohlenstoffatomen in den Cycloalkylgruppen steht,
und/oder ein Salz einer Verbindung der Formel (II)
("Wirkstoffe der Gruppe 2") wobei im allgemeinen auf 1 Gewichtsteil eines Wirkstoffs der Gruppe 1 - d.h. der allgemeinen Formel (I) - 0,01 bis 100 Gewichtsteile eines Wirkstoffs der Gruppe 2 - d.h. der allgemeinen Formel (II) - entfallen.

In der Formel (I) wurde Sulfentrazone ausgenommen, da synergistische Mischungen von Sulfentrazone mit den Verbindungen der Formel (II) bereits in der WO 98/12923 beschrieben sind.

Von besonderem Interesse sind erfindungsgemäße selektiv-herbizide Mittel, die gekennzeichnet sind durch einen Gehalt an einer Wirkstoffkombination umfassend
(a) zumindest ein N-Aryl-triazolin(thi)on der allgemeinen Formel (I), in welcher
   - Q¹: für Sauerstoff oder Schwefel steht,
   - R¹: fiir jeweils gegebenenfalls durch Fluor und/oder Chlor substituiertes Methyl, Ethyl, n- oder i-Propyl, n-, i-, s- oder t-Butyl steht,
   - R²: für jeweils gegebenenfalls durch Fluor und/oder Chlor substituiertes Methyl, Ethyl, n- oder i-Propyl, n-, i-, s- oder t-Butyl steht,
   - R³: fiir Wasserstoff, Fluor, Chlor oder Brom steht,
   - R⁴: für Cyano, Thiocarbamoyl, Fluor, Chlor oder Brom steht, und
   - R⁵: für Nitro, Cyano, Carboxy, Carbamoyl, Thiocarbamoyl, Hydroxy, Mercapto, Amino, Hydroxyamino, Aminosulfonyl, Fluor, Chlor, Brom, für jeweils gegebenenfalls durch Cyano, Hydroxy, Methoxy, Ethoxy, Acetyl, Propionyl, Methoxycarbonyl und/oder Ethoxy-carbonyl substituiertes Methyl, Ethyl, n-oder i-Propyl, n-, i-, s- oder t-Butyl, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylsulfinyl, Ethylsulfinyl, Methylsulfonyl, Ethylsulfonyl; Acetyl, Propionyl, n- oder i-Butyroyl, Methoxycarbonyl, Ethoxycarbonyl, n-oder i-Propoxycarbonyl, Methylamino, Ethylamino, n- oder i-Propylamino, n-, i-, s- oder t-Butylamino, für jeweils gegebenenfalls durch Cyano, Carboxy, Fluor, Chlor, Brom, Methoxycarbonyl und/oder Ethoxycarbonyl substituiertes Ethenyl, Propenyl, Butenyl, Ethinyl, Propinyl, Butinyl, Propenyloxy, Butenyloxy, Propinyloxy oder Butinyloxy, für jeweils gegebenenfalls durch Fluor und/oder Chlor substituiertes Acetylamino, Propionylamino, Methoxycarbonylamino, Ethoxycarbonylamino, Methylsulfonylamino, Ethylsulfonylamino, n- oder i-Propylsulfonylamino, n-, i-, s- oder t-Butylsulfonylamino, N,N-Bis-methylsulfonyl-amino, N,N-Bis-ethylsulfonyl-amino, N-Ethylsulfonyl-N-methylsulfonyl-amino, N-Acetyl-N-methylsulfonyl-amino, N-Propionyl-N-methylsulfonyl-amino, N-n-Butyroyl-N-methylsulfonyl-amino, N-i-Butyroyl-N-methylsulfonyl-amino, N-Acetyl-N-ethylsulfonyl-amino, N-Propionyl-N-ethylsulfonyl-amino, N-n-Butyroyl-N-ethylsulfonyl-amino, N-i-Butyroyl-N-ethylsulfonyl-amino, oder für jeweils gegebenenfalls durch Cyano, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy substituiertes N-Phenylcarbonyl-N-methylsulfonyl-amino, N-Phenylcarbonyl-N-ethylsulfonyl-amino, N-Thienylcarbonyl-N-methylsulfonyl-amino oder N-Thienylcarbonyl-N-ethylsulfonyl-amino steht,
   ausgenommen der Wirkstoff 2-(2,4-Dichlor-5-methylsulfonylamino-phenyl)-4-difluormethyl-5-methyl-2,4-dihydro-3H-1,2,4-triazol-3-on (Sulfentrazone)
   ("Wirkstoffe der Gruppe 1") und
(b) zumindest ein N-Arylsulfonylamino(thio)carbonyltriazolin(thi)on der allgemeinen Formel (II) in welcher
   - Q² und Q³: jeweils für Sauerstoff oder Schwefel stehen,
   - R⁶: für jeweils gegebenenfalls durch Cyano, Fluor, Chlor, Methoxy oder Ethoxy substituiertes Methyl, Ethyl, n- oder i-Propyl, n-, i-, s- oder t-Butyl, Ethenyl, Propenyl, Butenyl, Ethinyl, Propinyl, Butinyl, Methoxy, Ethoxy, n- oder i-Propoxy, n-, i-, s- oder t-Butoxy, Propenyloxy, Butenyloxy, Methylamino, Ethylamino, n- oder i-Propylamino, n-, i-, s- oder t-Butylamino, Dimethylamino oder Diethylamino, oder für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropylmethyl, Cyclopentylmethyl, Cyclohexylmethyl, Cyclopropylamino, Cyclobutylamino, Cyclopentylamino oder Cyclohexylamino steht,
   - R⁷: für Fluor, Chlor, Brom, für jeweils gegebenenfalls durch Cyano, Fluor, Chlor, Methoxy oder Ethoxy substituiertes Methyl, Ethyl, n- oder i-Propyl, n-, i-, s-oder t-Butyl, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino, Diethylamino, Ethenyl, Propenyl, Butenyl, Ethinyl, Propinyl, Butinyl, Ethenyloxy, Propenyloxy, Butenyloxy, Propinyloxy, Butinyloxy, Ethenylthio, Propenylthio, Butenylthio, Propinylthio, Butinylthio, Propenylamino, Butenylamino, Propinylamino oder Butinylamino, oder für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino, Cyclohexylamino, Cyclopropylmethyl, Cyclobutylmethyl, Cyclopentylmethyl oder Cyclohexylmethyl steht,
   - R⁸: für Nitro, Cyano, Fluor, Chlor, Brom, für jeweils gegebenenfalls durch Cyano, Fluor, Chlor, Methoxy oder Ethoxy substituiertes Methyl, Ethyl, n- oder i-Propyl, n-, i-, s- oder t-Butyl, Acetyl, Propionyl, n- oder i-Butyroyl, Methoxy, Ethoxy, n- oder i-Propoxy, n-, i-, s- oder t-Butoxy, Methoxycarbonyl, Ethoxycarbonyl, n- oder i-Propoxycarbonyl, Methylthio, Ethylthio, n- oder i-Propylthio, n-, i-, s- oder t-Butylthio, Methylsulfinyl, Ethylsulfinyl, n- oder i-Propylsulfinyl, Methylsulfonyl, Ethylsulfonyl, n- oder i-Propylsulfonyl, Methylamino, Ethylamino, n- oder i-Propylamino, n-, i-, s- oder t-Butylamino, Ethenyl, Propenyl, Butenyl, Propenyloxy, Butenyloxy, Propenylthio, Butenylthio, Propenylamino, Butenylamino, Ethinyl, Propinyl, Butinyl, Propinyloxy, Butinyloxy, Propinylthio oder Butinylthio, oder für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclppentyloxy, Cyclohexyloxy, Cyclopropylthio, Cyclobutylthio, Cyclopentylthio, Cyclohexylthio, Cyclopropylamino, Cyclobutylamino, Cyclopentylamino oder Cyclohexylamino steht,
   - R⁹: für Wasserstoff, Nitro, Cyano, Fluor, Chlor, Brom, für jeweils gegebenenfalls durch Cyano, Fluor, Chlor, Methoxy oder Ethoxy substituiertes Methyl, Ethyl, n- oder i-Propyl, n-, i-, s- oder t-Butyl, Acetyl, Propionyl, n- oder i-Butyroyl, Methoxy, Ethoxy, n- oder i-Propoxy, n-, i-, s- oder t-Butoxy, Methoxycarbonyl, Ethoxycarbonyl, n- oder i-Propoxycarbonyl, Methylthio, Ethylthio, n- oder i-Propylthio, n-, i-, s- oder t-Butylthio, Methylsulfinyl, Ethylsulfinyl, n-oder i-Propylsulfinyl, Methylsulfonyl, Ethylsulfonyl, n- oder i-Propylsulfonyl, Methylamino, Ethylamino, n- oder i-Propylamino, n-, i-, s- oder t-Butylamino, Ethenyl, Propenyl, Butenyl, Propenyloxy, Butenyloxy, Propenylthio, Butenylthio, Propenylamino, Butenylamino, Ethinyl, Propinyl, Butinyl, Propinyloxy, Butinyloxy, Propinylthio oder Butinylthio, oder für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino oder Cyclohexylamino steht,
und/oder ein Salz einer Verbindung der Formel (II)
("Wirkstoffe der Gruppe 2")
wobei im allgemeinen auf 1 Gewichtsteil eines Wirkstoffs der Gruppe 1 - d.h. der Formel (I) - 0,05 bis 50 Gewichtsteile eines Wirkstoffs der Gruppe 2 - d.h. der Formel (II) entfallen.

Von ganz besonderem Interesse sind erfindungsgemäße selektiv-herbizide Mittel, die gekennzeichnet sind durch einen Gehalt an einer Wirkstoffkombination umfassend
(a) zumindest ein N-Aryl-triazolin(thi)on der allgemeinen Formel (I), in welcher
   - Q1: für Sauerstoff oder Schwefel steht,
   - R¹: für Methyl, Ethyl oder Difluormethyl steht,
   - R²: für Methyl, Ethyl, Difluormethyl, Trifluormethyl, Fluorethyl, Difluorethyl, Trifluorethyl, Tetrafluorethyl oder Pentafluorethyl steht,
   - R³: für Fluor oder Chlor steht,
   - R⁴: für Cyano, Thiocarbamoyl, Chlor oder Brom steht, und
   - R⁵: für Nitro, Cyano, Carboxy, Carbamoyl, Thiocarbamoyl, Hydroxy, Mercapto, Amino, Fluor, Chlor, Brom, für jeweils gegebenenfalls durch Cyano, Methoxy, Ethoxy, Methoxycarbonyl und/oder Ethoxy-carbonyl substituiertes Methyl, Ethyl, n- oder i-Propyl, Methoxy, Ethoxy, n- oder i-Propoxy, Methylthio, Ethylthio, n- oder i-Propylthio, Methylsulfinyl, Ethylsulfinyl, Methylsulfonyl, Ethylsulfonyl, Methoxycarbonyl, Ethoxycarbonyl, n- oder i-Propoxycarbonyl, Methylamino, Ethylamino, n- oder i-Propylamino, für jeweils gegebenenfalls durch Cyano, Carboxy, Fluor, Chlor, Brom, Methoxycarbonyl und/oder Ethoxycarbonyl substituiertes Ethenyl oder Propenyl, für Propenyloxy, Butenyloxy, Propinyloxy oder Butinyloxy, für jeweils gegebenenfalls durch Fluor und/oder Chlor substituiertes Methylsulfonylamino, Ethylsulfonylamino, n- oder i-Propylsulfonylamino, n-, i-, s- oder t-Butylsulfonylamino, N,N-Bismethylsulfonyl-amino, N,N-Bis-ethylsulfonyl-amino, N-Ethylsulfonyl-N-methylsulfonyl-amino, N-Acetyl-N-methylsulfonyl-amino, N-Propionyl-N-methylsulfonyl-amino, N-n-Butyroyl-N-methylsulfonyl-amino, N-i-Butyroyl-N-methylsulfonyl-amino, N-Acetyl-N-ethylsulfonyl-amino, N-Propionyl-N-ethylsulfonyl-amino, N-n-Butyroyl-N-ethylsulfonyl-amino, N-i-Butyroyl-N-ethylsulfonyl-amino, oder für jeweils gegebenenfalls durch Cyano, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy substituiertes N-Phenylcarbonyl-N-methylsulfonyl-amino, N-Phenylcarbonyl-N-ethylsulfonyl-amino, N-Thienylcarbonyl-N-methylsulfonyl-amino oder N-Thienylcarbonyl-N-ethylsulfonyl-amino steht,
   ausgenommen der Wirkstoff 2-(2,4-Dichlor-5-methylsulfonylamino-phenyl)-4-difluormethyl-5-methyl-2,4-dihydro-3H-1,2,4-triazol-3-on (Sulfentrazone)
   ("Wirkstoffe der Gruppe 1") und
(b) zumindest ein N-Arylsulfonylamino(thio)carbonyltriazolin(thi)on der allgemeinen Formel (II) in welcher
   - Q² und Q³: jeweils für Sauerstoff oder Schwefel stehen,
   - R⁶: für jeweils gegebenenfalls durch Fluor, Chlor, Methoxy oder Ethoxy substituiertes Methyl, Ethyl, Methoxy oder Ethoxy, oder für Cyclopropyl steht,
   - R⁷: für Chlor, Brom, für jeweils gegebenenfalls durch Fluor, Chlor, Methoxy oder Ethoxy substituiertes Methyl, Ethyl, n- oder i-Propyl, Methoxy, Ethoxy, n-oder i-Propoxy, Methylthio, Ethylthio, n- oder i-Propylthio, Methylamino, Ethylamino, n- oder i-Propylamino, für Dimethylamino, Propenylthio, Propinylthio oder für Cyclopropyl steht,
   - R⁸: für Fluor, Chlor, Brom, für jeweils gegebenenfalls durch Fluor, Chlor, Methoxy oder Ethoxy substituiertes Methyl, Ethyl, n- oder i-Propyl, Methoxy, Ethoxy, n- oder i-Propoxy, Methoxycarbonyl, Ethoxycarbonyl, n- oder i-Propoxycarbonyl, Methylthio, Ethylthio, n- oder i-Propylthio, Methylsulfinyl, Ethylsulfinyl, n- oder i-Propylsulfinyl, Methylsulfonyl, Ethylsulfonyl, n- oder i-Propylsulfonyl, Methylamino, Ethylamino, n- oder i-Propylamino, oder für Cyclopropyl steht,
   - R⁹: für Wasserstoff, Nitro, Cyano, Fluor, Chlor, Brom, für jeweils gegebenenfalls durch Fluor, Chlor, Methoxy oder Ethoxy substituiertes Methyl, Ethyl, n-oder i-Propyl, Methoxy, Ethoxy, n- oder i-Propoxy, Methoxycarbonyl, Ethoxycarbpnyl, n- oder i-Propoxycarbonyl, Methylthio, Ethylthio, n- oder i-Propylthio, Methylsulfinyl, Ethylsulfinyl, n- oder i-Propylsulfinyl, Methylsulfonyl, Ethylsulfonyl, n- oder i-Propylsulfonyl, oder für Cyclopropyl steht,
und/oder ein Salz einer Verbindung der Formel (II)
("Wirkstoffe der Gruppe 2")
wobei im allgemeinen auf 1 Gewichtsteil eines Wirkstoffs der Gruppe 1 - d.h. der Formel (I) - 0,1 bis 10 Gewichtsteile eines Wirkstoffs der Gruppe 2 - d.h. der Formel (II) - entfallen.

An Stelle der reinen Wirkstoffe der Formel (II) können auch Salze der Verbindungen der Formel (II) mit Metallen und/oder mit basischen Stickstoffverbindungen in den erfindungsgemäßen Wirkstoffkombinationen eingesetzt werden.

Hierbei werden Salze der Verbindungen der Formel (II) mit Alkalimetallen, wie z.B. Lithium, Natrium, Kalium, Rubidium oder Cäsium, ganz besonders mit Natrium oder Kalium, mit Erdalkalimetallen, wie z.B. Magnesium, Calcium oder Barium, ganz besonders mit Calcium, oder mit Erdmetallen wie z.B. Aluminium bevorzugt.

Weiter werden Salze der Verbindungen der Formel (II) mit Ammoniak, mit C₁-C₆-Alkyl-aminen, wie z.B. mit Methylamin, Ethylamin, n- oder i-Propylamin, n-, i-, s-oder t-Butylamin, n-, i-, s- oder t-Pentylamin, mit Di-(C₁-C₆-alkyl)-aminen, wie z.B. Dimethylamin, Diethylamin, Dipropylamin, Diisopropylamin, Dibutylamin, Diisobutylamin, Di-s-butylamin, Dipentylamin, Diisopentylamin, Di-s-pentylamin und Dihexylamin, mit Tri-(C₁-C₄-alkyl)-aminen, wie z.B. Trimethylamin, Triethylamin, Tripropylamin, Tributylamin und N-Ethyl-diisopropylamin, mit C₃-C₆-Cycloalkyl-aminen, wie z.B. Cyclopentylamin oder Cyclohexylamin, mit Di-(C₃-C₆-cycloalkyl)-aminen, wie z.B. Dicyclopentylamin oder Dicyclohexylamin, mit N-C₁-C₄-Alkyl-C₃-C₆-cycloalkylaminen, wie z.B. N-Methyl-cyclopentylamin, N-Ethyl-cyclopentylamin, N-Methyl-cyclohexylamin oder N-Ethyl-cyclohexylamin, mit N,N-Di-(C₁-C₄-alkyl)-C₃-C₆-cycloalkyl-aminen, wie z.B. N,N-Dimethyl-cyclopentylamin, N,N-Diethyl-cyclopentylamin, N,N-Dimethyl-cyclohexylamin oder N,N-Diethyl-cyclohexylamin, mit N-C₁-C₄-Alkyl-di-(C₃-C₆-cycloalkyl)-aminen, wie z.B. N-Methyl-dicyclopentylamin, N-Ethyl-dicyclopentylamin, N-Methyl-dicyclohexylamin oder N-Ethyl-dicyclohexylamin, mit Phenyl-C₁-C₄-alkyl-aminen, wie z.B. Benzylamin, 1-Phenyl-ethylamin oder 2-Phenyl-ethylamin, mit N-C₁-C₄-Alkyl-phenyl-C₁-C₄-alkyl-aminen, wie z.B. N-Methyl-benzylamin oder N-Ethylbenzylamin, oder mit N,N-Di-(C₁-C₄-alkyl)-phenyl-C₁-C₄-alkyl-aminen, wie z.B. N,N-Dimethyl-benzylamin oder N,N-Diethyl-benzylamin, oder mit gegebenenfalls annellierten und/oder durch C₁-C₄-Alkyl substituierten Azinen, wie z.B. Pyridin, Chinolin, 2-Methyl-pyridin, 3-Methyl-pyridin, 4-Methyl-pyridin, 2,4-Dimethyl-pyridin, 2,5-Dimethyl-pyridin, 2,6-Dimethyl-pyridin oder 5-Ethyl-2-methyl-pyridin bevorzugt.

Als basische Verbindungen, welche zur Herstellung der erfindungsgemäß einsetzbaren Salze der Verbindungen der Formel (II) verwendet werden können seien genannt:
Alkalimetall- oder Erdalkalimetall-acetate, -amide, -carbonate, -hydrogencarbonate, hydride, -hydroxide oder -alkanolate, wie beispielsweise Natrium-, Kalium- oder Calcium-acetat, Lithium-, Natrium-, Kalium- oder Calcium-amid, Natrium-, Kaliumoder Calcium-carbonat, Natrium-, Kalium- oder Calcium-hydrogencarbonat, Lithium-, Natrium-, Kalium- oder Calcium-hydrid, Lithium-, Natrium-, Kalium- oder Calciumhydroxid, Natrium- oder Kalium- -methanolat, -ethanolat, n- oder i-propanolat, n-, i-, s- oder t-butanolat.

Als Beispiele für die als erfindungsgemäße Mischungspartner zu verwendenden Verbindungen der Formel (I) seien genannt:
2-(4-Cyano-2-fluor-5-methylsulfonylamino-phenyl)-4-methyl-5-trifluormethyl-2,4-dihydro-3H-1,2,4-triazol-3-on, 2-(4-Cyano-2-fluor-5-ethylsulfonylamino-phenyl)-4-methyl-5-trifluormethyl-2,4-dihydro-3H-1,2,4-triazol-3-on, 2-(4-Cyano-2-fluor-5-methylsulfonylamino-phenyl)-4-methyl-5-difluormethyl-2,4-dihydro-3H-1,2,4-triazol-3-on, 2-(4-Cyano-2-fluor-5-ethylsulfonylamino-phenyl)-4-methyl-5-difluormethyl-2,4-dihydro-3H-1,2,4-triazol-3-on, 2-(4-Cyano-2-fluor-5-methylsulfonylamino-phenyl)-4-ethyl-5-trifluormethyl-2,4-dihydro-3H-1,2,4-triazol-3-on, 2-(4-Cyano-2-fluor-5-ethylsulfonylamino-phenyl)-4-ethyl-5-trifluormethyl-2,4-dihydro-3H-1,2,4-triazol-3-on, 2-(4-Cyano-2-fluor-5-methylsulfonylamino-phenyl)-4-ethyl-5-difluormethyl-2,4-dihydro-3H-1,2,4-triazol-3-on, 2-(4-Cyano-2-fluor-5-ethylsulfonylamino-phenyl)-4-ethyl-5-difluormethyl-2,4-dihydro-3H-1,2,4-triazol-3-on, 2-(4-Thiocarbamoyl-2-fluor-5-methylsulfonylamino-phenyl)-4-methyl-5-trifluormethyl-2,4-dihydro-3H-1,2,4-triazol-3-on, 2-(4-Thiocarbamoyl-2-fluor-5-ethylsulfonylamino-phenyl)-4-methyl-5-trifluormethyl-2,4-dihydro-3H-1,2,4-triazol-3-on, 2-(4-Thiocarbamoyl-2-fluor-5-methylsulfonylamino-phenyl)-4-methyl-5-difluormethyl-2,4-dihydro-3H-1,2,4-triazol-3-on, 2-(4-Thiocarbamoyt-2-fluor-5-ethylsulfonylamino-phenyl)-4-methyl-5-difluonnethyl-2,4-dihydro-3H-1,2,4-triazol-3-on, 2-(4-Thiocarbamoyl-2-fluor-5-methylsulfonylamino-phenyl)-4-ethyl-5-trifluormethyl-2,4-dihydro-3H-1,2,4-triazol-3-on, 2-(4-Thiocarbamoyl-2-fluor-5-ethylsulfonylamino-phenyl)-4-ethyl-5-trifluormethyl-2,4-dihydro-3H-1,2,4-triazol-3-on, 2-(4-Thiocarbamoyl-2-fluor-5-methylsulfonylamino-phenyl)-4-ethyl-5-difluormethyl-2,4-dihydro-3H-1,2,4-triazol-3-on, 2-(4-Thiocarbamoyl-2-fluor-5-ethylsulfonylamino-phenyl)-4-ethyl-5-difluormethyl-2,4-dihydro-3H-1,2,4-triazol-3-on.

Die Verbindung 2-(4-Thiocarbamoyl-2-fluor-5-ethylsulfonylamino-phenyl)-4-methyl-5-trifluormethyl-2,4-dihydro-3H-1,2,4-triazol-3-on (I-1) - nach Chem. Abstracts auch als 4-[4,5-dihydro-4-methyl-5-oxo-(3 -trifluoromethyl)-1H-1,2,4-triazol-1-yl]-2-[(ethylsulfonyl)amino]-5-fluoro-benzenecarbothioamide zu bezeichnen (CAS-Reg.-Nr.: 173980-17-1) - sei als Mischungskomponente der Formel (I) besonders hervorgehoben.

Die Verbindungen 2-(4-Cyano-2-fluor-5-ethylsulfonylamino-phenyl)-4-methyl-5-trifluormethyl-2,4-dihydro-3H-1,2,4-triazol-3-on (I-2) - nach Chem. Abstracts auch als N-[2-Cyano-5-[4,5-dihydro-4-methyl-5-oxo-3-trifluoromethyl-1H-1,2,4-triazol-1-yl]-4-fluoro-phenyl]-ethansulfonamid zu bezeichnen (CAS-Reg.-Nr.: 157739-55-4) - und 2-(4-Cyano-2-fluor-5-ethylsulfonylamino-phenyl)-4-ethyl-5-trifluormethyl-2,4-dihydro-3H-1,2,4-triazol-3-on (I-3) - nach Chem. Abstracts auch als N-[2-Cyano-5-[4-ethyl-4,5-dihydro-5-oxo-3-trifluoromethyl-1H-1,2,4-triazol-1-yl]-4-fluoro-phenyl]-ethansulfonamid zu bezeichnen (CAS-Reg.-Nr.: 157739-37-2) - sowie 2-(4-Cyano-2-fluor-5-methylsulfonylamino-phenyl)-4-methyl-5-difluormethyl-2,4-dihydro-3H-1,2,4-triazol-3-on (I-4) - nach Chem. Abstracts auch als N-[2-Cyano-5-[3-difluoromethyl-4,5-dihydro-4-methyl-5-thioxo-1H-1,2,4-triazol-1-yl]-4-fluoro-phenyl]-methansulfonamid zu bezeichnen (CAS-Reg.-Nr.: 157739-46-3) - seien weiter als mögliche Mischungskomponenten der Formel (I) besonders hervorgehoben.

Die Verbindungen der Formel (I) sind in den oben zu den N-Aryl-triazolin(thi)onen angegebenen Patentanmeldungen bzw. Patentschriften beschrieben.

Als Mischungskomponenten aus den Wirkstoffen der Gruppe 2 seien besonders hervorgehoben:
2-(2-Chlor-phenylsulfonylaminocarbonyl)-, 2-(2-Brom-phenylsulfonylaminocarbonyl)-, 2-(2-Methyl-phenylsulfonylaminocarbonyl)-, 2-(2-Ethyl-phenylsulfonylaminocarbonyl)-, 2-(2-n-Propyl-phenylsulfonylaminocarbonyl), 2-(2-i-Propyl-phenylsulfonylaminocarbonyl), 2-(2-Trifluormethyl-phenylsulfonylaminocarbonyl)-, 2-(2-Methoxy-phenylsulfonylaminocarbonyl)-, 2-(2-Ethoxy-phenylsulfonylaminocarbonyl)-, 2-(2-n-Propoxy-phenylsulfonylaminocarbonyl)-, 2-(2-i-Propoxy-phenylsulfonylaminocarbonyl)-, 2-(2-Difluormethoxy-phenylsulfonylaminocarbonyl)-, 2-(2-Trifluormethoxy-phenylsulfonylaminocarbonyl)-, 2-(2-Methoxycarbonyl-phenylsulfonylaminocarbonyl)-, 2-(2-Ethoxycarbonyl-phenylsulfonylaminocarbonyl)-, 2-(2-n-Propoxycarbonyl-phenylsulfonylaminocarbonyl)-, 2-(2-i-Propoxycarbonyl-phenylsulfonylaminocarbonyl)- und 2-(2-Chlor-6-methyl-phenylsulfonylaminocarbonyl)-4-methyl-5-methoxy-2,4-dihydro-3H-1,2,4-triazol-3-on, -4-methyl-5-ethoxy-2,4-dihydro-3H-1,2,4-triazol-3-on, -4-methyl-5-n-propoxy-2,4-dihydro-3H-1,2,4-triazol-3-on, -4-methyl-5-i-propoxy-2,4-dihydro-3H-1,2,4-triazol-3-on, -4-methyl-5-trifluorethoxy-2,4-dihydro-3H-1,2,4-triazol-3-on, -4-methyl-5-methylthio-2,4-dihydro-3H-1,2,4-triazol-3-on, -4-methyl-5-ethylthio-2,4-dihydro-3H-1,2,4-triazol-3-on -4-methoxy-5-methyl-2,4-dihydro-3H-1,2,4-triazol-3-on, -4-methoxy-5-ethyl-2,4-dihydro-3H-1,2,4-triazol-3-on, -4-methoxy-5-n-propyl-2,4-dihydro-3H-1,2,4-triazol-3-on, -4-cyclopropyl-5-methoxy-2,4-dihydro-3H-1,2,4-triazol-3-on, 4-cyclopropyl-5-ethoxy-2,4-dihydro-3H-1,2,4-triazol-3-on, -4-cyclopropyl-5-n-propoxy-2,4-dihydro-3H-1,2,4-triazol-3-on, -4-cyclopropyl-5-i-propoxy-2,4-dihydro-3H-1,2,4-triazol-3-on und -4-cyclopropyl-5-trifluorethoxy-2,4-dihydro-3H-1,2,4-triazol-3-on sowie die Natriumund Kalium-salze dieser Verbindungen.

Die Verbindungen 2-(2-Methoxycarbonyl-phenylsulfonylaminocarbonyl)-4-methyl-5-n-propoxy-2,4-dihydro-3H-1,2,4-triazol-3-on (II-1) und 2-(2-Trifluormethoxy-phenylsulfonylaminocarbonyl)-4-methyl-5-methoxy-2,4-dihydro-3H-1,2,4-triazol-3-on (II-2) sowie ihre Natriumsalze - (II-1-Na-Salz bzw. II-2-Na-Salz) - seien als Mischungskomponenten der Formel (II) besonders hervorgehoben.

Die Verbindungen der Formel (II) sind in den oben zu den N-Arylsulfonylaminocarbonyl-triazolinonen angegebenen Patentanmeldungen bzw. Patentschriften beschrieben.

Es wurde nun überraschend gefunden, daß die oben definierten Wirkstoffkombinationen aus N-Aryl-triazolinonen der allgemeinen Formel (I) und N-Arylsulfonylaminocarbonyl-triazolinonen der allgemeinen Formel (II) bei sehr guter Nutzpflanzen-Verträglichkeit eine besonders hohe herbizide Wirksamkeit aufweisen und in verschiedenen Kulturen, insbesondere in Weizen, daneben aber auch in Mais, Gerste und Reis zur selektiven Unkrautbekämpfung verwendet werden können.

Überraschenderweise ist die herbizide Wirksamkeit der erfindungsgemäßen Wirkstoffkombinationen aus Verbindungen der oben aufgeführten Gruppen 1 und 2 erheblich höher als die Summe der Wirkungen der einzelnen Wirkstoffe.

Es liegt somit ein nicht vorhersehbarer synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter gut bekämpfen. Die neuen Wirkstoffkombinationen stellen somit eine wertvolle Bereicherung der Selektivherbizide dar.

Die erfindungsgemäßen Wirkstoffkombinationen können z.B. bei den folgenden Pflanzen verwendet werden:
Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.
Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita.
Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.
Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) 0,01 bis 100 Gewichtsteile, vorzugsweise 0,05 bis 50 Gewichtsteile und besonders bevorzugt 0,1 bis 10 Gewichtsteile Wirkstoff der Gruppe 2.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoffimprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Oleo DuPont 11E") oder Ammoniumsalze wie z.B. Ammoniumsulfat oder Ammoniumrhodanid aufzunehmen.
Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäßen Wirkstoffkombinationen können vor und nach dem Auflaufen der Pflanzen appliziert werden, also im Vorauflauf und Nachauflauf-Verfahren. Sie können auch vor der Saat in den Boden eingearbeitet werden.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Würkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Aus den folgenden Beispielen geht hervor, daß die neuen Wirkstoffkombinationen synergistisch wirken.

### Beispiel A

### Post-emergence-Test

- Lösungsmittel:: 5 Gewichtsteile Aceton
- Emulgator:: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben so, daß die jeweils gewünschten Wirkstoffmengen pro Flächeneinheit ausgebracht werden. Die Konzentration der Spritzbrühe wird so gewählt, daß in 1000 1 Wasser/ha die jeweils gewünschten Wirkstoffmengen ausgebracht werden.

Nach drei Wochen wird der Schädigungsgrad der Pflanzen bonitiert in % Schädigung im Vergleich zur Entwicklung der unbehandelten Kontrolle.

Es bedeuten:
0 % = keine Wirkung (wie unbehandelte Kontrolle)
100 % = totale Vernichtung

**Tabelle A-1:**

| Post-emergence-Test / Gewächshaus | | | | | | | | |
|---|---|---|---|---|---|---|---|---|
| Bei den Testpflanzen ist die Schädigung in Prozent angegeben. | | | | | | | | |

| Wirkstoff bzw. -kombination | Aufwandmenge (g a.i./ha) | Weizen | Alopecurus | Abutilon | Datura | Ipomoea | Polygonum | Veronica |
|---|---|---|---|---|---|---|---|---|
| II-1-Na-Salz | 30 | 20 | 70 | 80 | 70 | 70 | 60 | 50 |
| II-1-Na-Salz + I-1 | 15 + 15 | 10 | 90 | 100 | 95 | 100 | 95 | 100 |

**Tabelle A-2:**

| Post-emergence-Test / Gewächshaus | | | | | |
|---|---|---|---|---|---|
| Bei den Testpflanzen ist die Schädigung in Prozent angegeben. | | | | | |

| Wirkstoff bzw. -kombination | Aufwandmenge (g a.i./ha) | Weizen | Alopecurus | Bromus | Echinochloa |
|---|---|---|---|---|---|
| I-1 | 30 | 15 | 20 | 20 | 30 |
| I-1 | 15 | | | | |
| + | + | 10 | 90 | 90 | 95 |
| II-1-Na-Salz | 15 | | | | |

**Tabelle A-3:**

| Post-emergence-Test / Gewächshaus | | | | | | |
|---|---|---|---|---|---|---|
| Bei den Testpflanzen ist die Schädigung in Prozent angegeben. | | | | | | |

| Wirkstoff bzw. -kombination | Aufwandmenge (g a.i./ha) | Weizen | Lolium | Abutilon | Ipomoea | Matricaria |
|---|---|---|---|---|---|---|
| II-2-Na-Salz | 30 | 30 | 70 | 60 | 70 | 80 |
| II-2-Na-Salz | 15 | | | | | |
| + | + | 5 | 90 | 100 | 100 | 100 |
| I-1 | 15 | | | | | |

**Tabelle A-4:**

| Post-emergence-Test / Gewächshaus | | | | | | | | | | |
|---|---|---|---|---|---|---|---|---|---|---|
| Bei den Testpflanzen ist die Schädigung in Prozent angegeben. | | | | | | | | | | |

| Wirkstoff bzw. -kombination | Aufwandmenge (g a.i./ha) | Weizen | Alopecurus | Avena fatua | Bromus | Echinochloa | Lolium | Setaria | Sorghum | Viola |
|---|---|---|---|---|---|---|---|---|---|---|
| I-1 | 30 | 15 | 20 | 20 | 20 | 30 | 30 | 40 | 50 | 40 |
| I-1 | 15 | | | | | | | | | |
| + | + | 5 | 70 | 70 | 90 | 80 | 90 | 90 | 95 | 80 |
| II-2-Na-Salz | 15 | | | | | | | | | |

**Tabelle A-5:**

| Post-emergence-Test / Gewächshaus | | | | | | | | | |
|---|---|---|---|---|---|---|---|---|---|
| Bei den Testpflanzen ist die Schädigung in Prozent angegeben. | | | | | | | | | |

| Wirkstoff bzw. -kombination | Aufwand menge (g a.i./ha) | Weizen | Abutilon | Chenopodium | Datura | Galium | Matricaria | Polygonum | Veronica |
|---|---|---|---|---|---|---|---|---|---|
| II-1-Na-Salz | 30 | 10 | 50 | 70 | 60 | 60 | 70 | 40 | 50 |
| II-1-Na-Salz | 15 | 5 | 100 | 100 | 90 | 100 | 90 | 95 | 100 |
| + | + | | | | | | | | |
| I-2 | 15 | | | | | | | | |

**Tabelle A-6:**

| Post-emergence-Test / Gewächshaus | | | | | | | |
|---|---|---|---|---|---|---|---|
| Bei den Testpflanzen ist die Schädigung in Prozent angegeben. | | | | | | | |

| Wirkstoff bzw. -kornbination | Aufwandmenge (g a.i./ha) | Weizen | Alopecurus | Bromus | Echinochloa | Polygonum | Viola |
|---|---|---|---|---|---|---|---|
| I-2 | 30 | 10 | 20 | 40 | 40 | 70 | 60 |
| I-2 | 15 | | | | | | |
| + | + | 5 | 80 | 80 | 90 | 95 | 90 |
| II-1-Na- | 15 | | | | | | |
| Salz | | | | | | | |

**Tabelle A-7:**

| Post-emergence-Test / Gewächshaus | | | | | | | | | | |
|---|---|---|---|---|---|---|---|---|---|---|
| Bei den Testpflanzen ist die Schädigung in Prozent angegeben. | | | | | | | | | | |

| Wirkstoff bzw. -kombination | Aufwandmenge (g a.i./ha) | Weizen | Abutilon | Cassia | Chenopodium | Datura | Ipomoea | Polygonum | Veronica | Viola |
|---|---|---|---|---|---|---|---|---|---|---|
| II-1-Na-Salz | 30 | 10 | 50 | 60 | 70 | 60 | 80 | 40 | 50 | 70 |
| II-1-Na- | 15 | | | | | | | | | |
| Salz | + | 0 | 95 | 80 | 100 | 95 | 100 | 95 | 95 | 95 |
| + | 15 | | | | | | | | | |
| I-3 | | | | | | | | | | |

**Tabelle A-8:**

| Post-emergence-Test / Gewächshaus | | | | | | |
|---|---|---|---|---|---|---|
| Bei den Testpflanzen ist die Schädigung in Prozent angegeben | | | | | | |

| Wirkstoff bzw. -kombination | Aufwandmenge (g a.i./ha) | Weizen | Alopecurus | Bromus | Cyperus | Echinochloa |
|---|---|---|---|---|---|---|
| I-3 | 30 | 0 | 10 | 30 | 50 | 50 |
| I-3 | 15 | | | | | |
| + | + | 0 | 70 | 80 | 80 | 90 |
| II-1-Na-Salz | 15 | | | | | |

**Tabelle A-9:**

| Post-emergence-Test / Gewächshaus | | | | | | | | | | |
|---|---|---|---|---|---|---|---|---|---|---|
| Bei den Testpflanzen ist die Schädigung in Prozent angegeben. | | | | | | | | | | |

| Wirkstoff bzw. -kombination | Aufwandmenge (g a.i./ha) | Weizen | Bromus | Abutilon | Chenopodium | Datura | Galium | Matricaria | Polygonum | Veronica |
|---|---|---|---|---|---|---|---|---|---|---|
| II-1-Na-Salz | 30 | 10 | 70 | 50 | 70 | 60 | 60 | 70 | 40 | 50 |
| II-1-Na- | 15 | | | | | | | | | |
| Salz | + | 10 | 90 | 100 | 100 | 95 | 95 | 95 | 100 | 100 |
| + | 15 | | | | | | | | | |
| I-4 | | | | | | | | | | |

**Tabelle A-10:**

| Post-emergence-Test / Gewächshaus | | | | | |
|---|---|---|---|---|---|
| Bei den Testpflanzen ist die Schädigung in Prozent angegeben | | | | | |

| Wirkstoff bzw. -kombination | Aufwandmenge (g a.i./ha) | Weizen | Alopecurus | Bromus | Echinochloa |
|---|---|---|---|---|---|
| I-4 | 30 | 15 | 20 | 30 | 60 |
| I-4 | 15 | | | | |
| + | + | 10 | 80 | 90 | 90 |
| II-1-Na- | 15 | | | | |
| Salz | | | | | |

**Tabelle A-11:**

| Post-emergence-Test / Gewächshaus | | | | | | | |
|---|---|---|---|---|---|---|---|
| Bei den Testpflanzen ist die Schädigung in Prozent angegeben. | | | | | | | |

| Wirkstoff bzw. -kombination | Aufwandmenge (g a.i./ha) | Weizen | Abutilon | Chenopodium | Galium | Ipomoea | Xantium |
|---|---|---|---|---|---|---|---|
| II-2-Na-Salz | 30 | 15 | 60 | 70 | 50 | 80 | 80 |
| II-2-Na-Salz | 15 | 10 | 100 | 95 | 95 | 100 | 95 |
| + | + | | | | | | |
| I-2 | 15 | | | | | | |

**Tabelle A-12:**

| Post-emergence-Test / Gewächshaus | | | | | | | |
|---|---|---|---|---|---|---|---|
| Bei den Testpflanzen ist die Schädigung in Prozent angegeben. | | | | | | | |

| Wirkstoff bzw. -kombination | Aufwandmenge (g a.i./ha) | Weizen | Avena fatua | Bromus | Echinochloa | Setaria | Polygonum |
|---|---|---|---|---|---|---|---|
| I-2 | 30 | 10 | 20 | 40 | 40 | 50 | 70 |
| I-2 | 15 | | | | | | |
| + | + | 10 | 70 | 70 | 90 | 90 | 95 |
| II-2-Na- Salz | 15 | | | | | | |

**Tabelle A-13:**

| Post-emergence-Test / Gewächshaus | | | | | | | |
|---|---|---|---|---|---|---|---|
| Bei den Testpflanzen ist die Schädigung in Prozent angegeben. | | | | | | | |

| Wirkstoff bzw. -kombination | Aufwandmenge (g a.i./ha) | Weizen | Abutilon | Chenopodium | Ipomoea | Veronica | Viola |
|---|---|---|---|---|---|---|---|
| II-2-NaSalz | 30 | 15 | 60 | 70 | 80 | 60 | 80 |
| II-2-Na-Salz | 15 | 10 | 90 | 100 | 100 | 95 | 100 |
| + | + | | | | | | |
| I-3 | 15 | | | | | | |

**Tabelle A-14:**

| Post-emergence-Test / Gewächshaus | | | | | | |
|---|---|---|---|---|---|---|
| Bei den Testpflanzen ist die Schädigung in Prozent angegeben. | | | | | | |

| Wirkstoff bzw. -kombination | Aufwandmenge (g a.i./ha) | Weizen | Alopecurus | Avena fatua | Bromus | Echinochloa |
|---|---|---|---|---|---|---|
| I-3 | 30 | 0 | 10 | 20 | 30 | 50 |
| I-3 | 15 | | | | | |
| + | + | 10 | 50 | 60 | 70 | 80 |
| II-2-Na-Salz | 15 | | | | | |

**Tabelle A-15:**

| Post-emergence-Test / Gewächshaus | | | | | | | | |
|---|---|---|---|---|---|---|---|---|
| Bei den Testpflanzen ist die Schädigung in Prozent angegeben. | | | | | | | | |

| Wirkstoff bzw. -kombination | Aufwandmenge (g a.i./ha) | Weizen | Abutilon | Chenopodium | Ipomoea | Matricaria | Veronica | Viola |
|---|---|---|---|---|---|---|---|---|
| II-2-Na-Salz | 30 | 15 | 60 | 70 | 80 | 70 | 60 | 80 |
| II-2-Na-Salz | 15 | 10 | 95 | 100 | 100 | 100 | 95 | 95 |
| + | + | | | | | | | |
| I-4 | 15 | | | | | | | |

**Tabelle A-16:**

| Post-emergence-Test / Gewächshaus | | | | |
|---|---|---|---|---|
| Bei den Testpflanzen ist die Schädigung in Prozent angegeben. | | | | |

| Wirkstoff bzw. -kombination | Aufwandmenge (g a.i./ha) | Weizen | Echinochloa | Setaria |
|---|---|---|---|---|
| I-4 | 30 | 15 | 60 | 40 |
| I-4 | 15 | | | |
| + | + | 10 | 80 | 70 |
| II-2-Na-Salz | 15 | | | |

## Patentansprüche

1. Herbizides Mittel, **gekennzeichnet durch** einen Gehalt an einer Wirkstoffkombination umfassend
(a) zumindest ein N-Aryl-triazolin(thi)on der allgemeinen Formel (I) 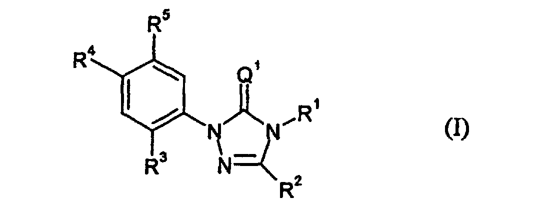 in welcher
Q¹ für Sauerstoff oder Schwefel steht,
R¹ für gegebenenfalls **durch** Halogen substituiertes Alkyl mit 1 bis 5 Kohlenstoffatomen steht,
R² für gegebenenfalls **durch** Halogen substituiertes Alkyl mit 1 bis 5 Kohlenstoffatomen steht,
R³ für Wasserstoff oder Halogen steht,
R⁴ für Cyano, Thiocarbamoyl oder Halogen steht, und
R⁵ für Nitro, Cyano, Carboxy, Carbamoyl, Thiocarbamoyl, Hydroxy, Mercapto, Amino, Hydroxyamino, Aminosulfonyl, Halogen, für jeweils gegebenenfalls **durch** Cyano, Hydroxy, C₁-C₄-Alkoxy, C₁-C₄-Alkyl-carbonyl und/oder C₁-C₄-Alkoxy-carbonyl substituiertes Alkyl, Alkoxy, Alkylthio, Alkylsulfinyl, Alkylsulfonyl, Alkylcarbonyl, Alkoxycarbonyl oder Alkylamino mit jeweils 1 bis 6 Kohlenstoffatomen, für jeweils gegebenenfalls **durch** Cyano, Carboxy, Halogen und/oder C₁-C₄-Alkoxy-carbonyl substituiertes Alkenyl, Alkinyl, Alkenyloxy oder Alkinyloxy mit jeweils 2 bis 6 Kohlenstoffatomen, für jeweils gegebenenfalls **durch** Halogen substituiertes Alkylcarbonylamino, Alkoxycarbonylamino, Alkylsulfonylamino, N,N-Bisalkylsulfonyl-amino oder N-Alkylcarbonyl-N-alkylsulfonyl-amino mit jeweils 1 bis 6 Kohlenstoffatomen in den Alkylgruppen, oder für jeweils gegebenenfalls **durch** Cyano, Halogen, C₁-C₄-Alkyl, C₁-C₄-Halogenalkyl, C₁-C₄-Alkoxy oder C₁-C₄-Halogenalkoxy substituiertes N-Phenylcarbonyl-N-alkylsulfonyl-amino, N-Pyridylcarbonyl-N-alkylsulfonyl-amino, N-Furylcarbonyl-N-alkylsulfonyl-amino oder N-Thienylcarbonyl-N-alkylsulfonyl-amino mit jeweils 1 bis 6 Kohlenstoffatomen in den Alkylgruppen steht,
ausgenommen der Wirkstoff 2-(2,4-Dichlor-5-methylsulfonylaminophenyl)-4-difluormethyl-5-methyl-2,4-dihydro-3H-1,2,4-triazol-3-on (Sulfentrazone)
("Wirkstoffe der Gruppe 1") und
(b) zumindest ein N-Arylsulfonylamino(thio)carbonyl-triazolin(thi)on der allgemeinen Formel (II) 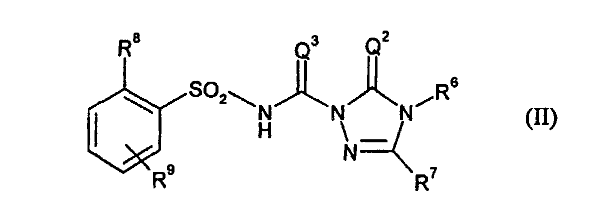 in welcher
Q² und Q³ jeweils für Sauerstoff oder Schwefel stehen,
R⁶ für jeweils gegebenenfalls **durch** Cyano, Halogen oder C₁-C₄-Alkoxy substituiertes Alkyl, Alkenyl, Alkinyl, Alkoxy, Alkenyloxy, Alkylamino
oder Dialkylamino mit jeweils bis zu 6 Kohlenstoffatomen, oder für jeweils gegebenenfalls **durch** Cyano, Halogen oder C₁-C₄-Alkyl substituiertes Cycloalkyl, Cycloalkylalkyl oder Cycloalkylamino mit jeweils 3 bis 6 Kohlenstoffatomen in den Cycloalkylgruppen und gegebenenfalls 1 bis 4 Kohlenstoffatomen im Alkylteil steht,
R⁷ für Wasserstoff, für Halogen, für jeweils gegebenenfalls **durch** Cyano, Halogen oder C₁-C₄-Alkoxy substituiertes Alkyl, Alkoxy, Alkylthio, Alkylamino, Dialkylamino, Alkenyl, Alkinyl, Alkenyloxy, Alkinyloxy, Alkenylthio, Alkinylthio, Alkenylamino oder Alkinylamino mit jeweils bis zu 6 Kohlenstoffatomen, oder für jeweils gegebenenfalls **durch** Cyano, Halogen oder C₁-C₄-Alkyl substituiertes Cycloalkyl, Cycloalkyloxy, Cycloalkylthio, Cycloalkylamino oder Cycloalkylalkyl mit jeweils 3 bis 6 Kohlenstoffatomen in den Cycloalkylgruppen und gegebenenfalls 1 bis 4 Kohlenstoffatomen im Alkylteil steht,
R⁸ für Nitro, Cyano, Halogen, Phenyl, Phenoxy, für jeweils gegebenenfalls **durch** Cyano, Halogen oder C₁-C₄-Alkoxy substituiertes Alkyl, Alkylcarbonyl, Alkoxy, Alkoxycarbonyl, Alkylthio, Alkylsulfinyl, Alkylsulfonyl, Dialkylaminosulfonyl, Alkylamino, Alkenyl, Alkenyloxy, Alkenylthio, Alkenylamino, Alkinyl, Alkinyloxy, Alkinylthio mit jeweils bis zu 6 Kohlenstoffatomen, oder für jeweils gegebenenfalls **durch** Cyano, Halogen oder C₁-C₄-Alkyl substituiertes Cycloalkyl, Cycloalkyloxy, Cycloalkylthio, Cycloalkylamino mit jeweils 3 bis 6 Kohlenstoffatomen in den Cycloalkylgruppen steht, und
R⁹ für Wasserstoff, Nitro, Cyano, Halogen, Phenyl, Phenoxy, für jeweils gegebenenfalls **durch** Cyano, Halogen oder C₁-C₄-Alkoxy substituiertes substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy oder Alkinylthio mit jeweils bis zu 6 Kohlenstoffatomen, oder für jeweils gegebenenfalls **durch** Cyano, Halogen oder C₁-C₄-Alkyl substituiertes Cycloalkyl, Cycloalkyloxy, Cycloalkylthio, Cycloalkylamino mit jeweils 3 bis 6 Kohlenstoffatomen in den Cycloalkylgruppen steht,
und/oder ein Salz einer Verbindung der Formel (II)
("Wirkstoffe der Gruppe 2").

2. Herbizides Mittel gemäß Anspruch 1, **gekennzeichnet durch** einen Gehalt an einer Wirkstoffkombination umfassend
(a) zumindest ein N-Aryl-triazolin(thi)on der allgemeinen Formel (I), in welcher
Q¹ für Sauerstoff oder Schwefel steht,
R¹ für jeweils gegebenenfalls **durch** Fluor und/oder Chlor substituiertes Methyl, Ethyl, n- oder i-Propyl, n-, i-, s- oder t-Butyl steht,
R² für jeweils gegebenenfalls **durch** Fluor und/oder Chlor substituiertes Methyl, Ethyl, n- oder i-Propyl, n-, i-, s- oder t-Butyl steht,
R³ für Wasserstoff, Fluor, Chlor oder Brom steht,
R⁴ für Cyano, Thiocarbamoyl, Fluor, Chlor oder Brom steht, und
R⁵ für Nitro, Cyano, Carboxy, Carbamoyl, Thiocarbamoyl, Hydroxy, Mercapto, Amino, Hydroxyamino, Aminosulfonyl, Fluor, Chlor, Brom, für jeweils gegebenenfalls **durch** Cyano, Hydroxy, Methoxy, Ethoxy, Acetyl, Propionyl, Methoxycarbonyl und/oder Ethoxycarbonyl substituiertes Methyl, Ethyl, n- oder i-Propyl, n-, i-, s- oder t-Butyl, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylsulfinyl, Ethylsulfinyl, Methylsulfonyl, Ethylsulfonyl, Acetyl, Propionyl, n- oder i-Butyroyl, Methoxycarbonyl, Ethoxycarbonyl, n-oder i-Propoxycarbonyl, Methylamino, Ethylamino, n- oder i-Propylamino, n-, i-, s- oder t-Butylamino, für jeweils gegebenenfalls **durch** Cyano, Carboxy, Fluor, Chlor, Brom, Methoxycarbonyl und/oder Ethoxycarbonyl substituiertes Ethenyl, Propenyl, Butenyl, Ethinyl, Propinyl, Butinyl, Propenyloxy, Butenyloxy, Propinyloxy oder Butinyloxy, für jeweils gegebenenfalls **durch** Fluor und/oder Chlor substituiertes Acetylamino, Propionylamino, Methoxycarbonylamino, Ethoxycarbonylamino, Methylsulfonylamino, Ethylsulfonylamino, n-oder i-Propylsulfonylamino, n-, i-, s- oder t-Butylsulfonylamino, N,N-Bis-methylsulfonyl-amino, N,N-Bis-ethylsulfonyl-amino, N-Ethylsulfonyl-N-methylsulfonyl-amino, N-Acetyl-N-methylsulfonyl-amino, N-Propionyl-N-methylsulfonyl-amino, N-n-Butyroyl-N-methylsulfonyl-amino, N-i-Butyroyl-N-methylsulfonyl-amino, N-Acetyl-N-ethylsulfonyl-amino, N-Propionyl-N-ethylsulfonyl-amino, N-n-Butyroyl-N-ethylsulfonyl-amino, N-i-Butyroyl-N-ethylsulfonyl-amino, oder für jeweils gegebenenfalls **durch** Cyano, Fluor, Chlor, Brom, Methyl, Ethyl, n- oder i-Propyl, n-, i-, s- oder t-Butyl, Trifluormethyl, Methoxy, Ethoxy, n- oder i-Propoxy, Difluormethoxy oder Trifluormethoxy substituiertes N-Phenylcarbonyl-N-methylsulfonyl-amino, N-Phenylcarbonyl-N-ethylsulfonyl-amino, N-Thienylcarbonyl-N-methylsulfonyl-amino oder N-Thienylcarbonyl-N-ethylsulfonyl-amino steht, ausgenommen der Wirkstoff 2-(2,4-Dichlor-5-methylsulfonylaminophenyl)-4-difluormethyl-5-methyl-2,4-dihydro-3H-1,2,4-triazol-3-on (Sulfentrazone)
("Wirkstoffe der Gruppe 1") und
(b) zumindest ein N-Arylsulfonylamino(thio)carbonyltriazolin(thi)on der allgemeinen Formel (II) in welcher
Q² und Q³ jeweils für Sauerstoff oder Schwefel stehen,
R⁶ für jeweils gegebenenfalls **durch** Cyano, Fluor, Chlor, Methoxy oder Ethoxy substituiertes Methyl, Ethyl, n- oder i-Propyl, n-, i-, s- oder t-Butyl, Ethenyl, Propenyl, Butenyl, Ethinyl, Propinyl, Butinyl, Methoxy, Ethoxy, n- oder i-Propoxy, n-, i-, s- oder t-Butoxy, Propenyloxy, Butenyloxy, Methylamino, Ethylamino, n- oder i-Propylamino, n-, i-, s- oder t-Butylamino, Dimethylamino oder Diethylamino, oder für jeweils gegebenenfalls **durch** Cyano, Fluor, Chlor, Brom, Methyl, Ethyl, n- oder i-Propyl substituiertes Cyclopropyl, Cyclobutyl, Cyclopentyl, Cyclohexyl, Cyclopropylmethyl, Cyclobutylmethyl, Cyclopentylmethyl, Cyclohexylmethyl, Cyclopropylamino, Cyclobutylamino, Cyclopentylamino oder Cyclohexylamino steht,
R⁷ für Fluor, Chlor, Brom, für jeweils gegebenenfalls **durch** Cyano, Fluor, Chlor, Methoxy oder Ethoxy substituiertes Methyl, Ethyl, n- oder i-Propyl, n-, i-, s- oder t-Butyl, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino, Diethylamino, Ethenyl, Propenyl, Butenyl, Ethinyl, Propinyl, Butinyl, Ethenyloxy, Propenyloxy, Butenyloxy, Propinyloxy, Butinyloxy, Ethenylthio, Propenylthio, Butenylthio, Propinylthio, Butinylthio, Propenylamino, Butenylamino, Propinylamino oder Butinylamino, oder für jeweils gegebenenfalls **durch** Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino, Cyclohexylamino, Cyclopropylmethyl, Cyclobutylmethyl, Cyclopentylmethyl oder Cyclohexylmethyl steht,
R⁸ für Nitro, Cyano, Fluor, Chlor, Brom, für jeweils gegebenenfalls **durch** Cyano, Fluor, Chlor, Methoxy oder Ethoxy substituiertes Methyl, Ethyl, n- oder i-Propyl, n-, i-, s- oder t-Butyl, Acetyl, Propionyl, n-oder i-Butyroyl, Methoxy, Ethoxy, n- oder i-Propoxy, n-, i-, s- oder t-Butoxy, Methoxycarbonyl, Ethoxycarbonyl, n- oder i-Propoxycarbonyl, Methylthio, Ethylthio, n- oder i-Propylthio, n-, i-, s- oder t-Butylthio, Methylsulfinyl, Ethylsulfinyl, n- oder i-Propylsulfinyl, Methylsulfonyl, Ethylsulfonyl, n- oder i-Propylsulfonyl, Methylamino, Ethylamino, n- oder i-Propylamino, n-, i-, s- oder t-Butylamino, Ethenyl, Propenyl, Butenyl, Propenyloxy, Butenyloxy, Propenylthio, Butenylthio, Propenylamino, Butenylamino, Ethinyl, Propinyl, Butinyl, Propinyloxy, Butinyloxy, Propinylthio oder Butinylthio, oder für jeweils gegebenenfalls **durch** Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino oder Cyclohexylamino steht,
R⁹ für Wasserstoff, Nitro, Cyano, Fluor, Chlor, Brom, für jeweils gegebenenfalls **durch** Cyano, Fluor, Chlor, Methoxy oder Ethoxy substituiertes Methyl, Ethyl, n- oder i-Propyl, n-, i-, s- oder t-Butyl, Acetyl, Propionyl, n- oder i-Butyroyl, Methoxy, Ethoxy, n- oder i-Propoxy, n-, i-, s- oder t-Butoxy, Methoxycarbonyl, Ethoxycarbonyl, n- oder i-Propoxycarbonyl, Methylthio, Ethylthio, n- oder i-Propylthio, n-, i-, s-oder t-Butylthio, Methylsulfinyl, Ethylsulfinyl, n- oder i-Propylsulfinyl, Methylsulfonyl, Ethylsulfonyl, n- oder i-Propylsulfonyl, Methylamino, Ethylamino, n- oder i-Propylamino, n-, i-, s- oder t-Butylamino, Ethenyl, Propenyl, Butenyl, Propenyloxy, Butenyloxy, Propenylthio, Butenylthio, Propenylamino, Butenylamino, Ethinyl, Propinyl, Butinyl, Propinyloxy, Butinyloxy, Propinylthio oder Butinylthio, oder für jeweils gegebenenfalls **durch** Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino oder Cyclohexylamino steht,
und/oder ein Salz einer Verbindung der Formel (II)
("Wirkstoffe der Gruppe 2").

3. Herbizides Mittel gemäß Anspruch 1 durch einen Gehalt an einer Wirkstoffkombination umfassend
(a) zumindest ein N-Aryl-triazolin(thi)on der allgemeinen Formel (1), in welcher
Q¹ für Sauerstoff oder Schwefel steht,
R¹ für Methyl, Ethyl oder Difluormethyl steht,
R² für Methyl, Ethyl, Difluormethyl, Trifluormethyl, Fluorethyl, Difluorethyl, Trifluorethyl, Tetrafluorethyl oder Pentafluorethyl steht,
R³ für Fluor oder Chlor steht,
R⁴ für Cyano, Thiocarbamoyl, Chlor oder Brom steht, und
R⁵ für Nitro, Cyano, Carboxy, Carbamoyl, Thiocarbamoyl, Hydroxy, Mercapto, Amino, Fluor, Chlor, Brom, für jeweils gegebenenfalls durch Cyano, Methoxy, Ethoxy, Methoxycarbonyl und/oder Ethoxycarbonyl substituiertes Methyl, Ethyl, n- oder i-Propyl, Methoxy, Ethoxy, n- oder i-Propoxy, Methylthio, Ethylthio, n- oder i-Propylthio, Methylsulfinyl, Ethylsulfinyl, Methylsulfonyl, Ethylsulfonyl, Methoxycarbonyl, Ethoxycarbonyl, n- oder i-Propoxycarbonyl, Methylamino, Ethylamino, n- oder i-Propylamino, für jeweils gegebenenfalls durch Cyano, Carboxy, Fluor, Chlor, Brom, Methoxycarbonyl und/oder Ethoxycarbonyl substituiertes Ethenyl oder Propenyl, für Propenyloxy, Butenyloxy, Propinyloxy oder Butinyloxy, für jeweils gegebenenfalls durch Fluor und/oder Chlor substituiertes Methylsulfonylamino, Ethylsulfonylamino, n- oder i-Propylsulfonylamino, n-, i-, s- oder t-Butylsulfonylamino, N,N-Bis-methylsulfonylamino, N,N-Bis-ethylsulfonyl-amino, N-Ethylsulfonyl-N-methylsulfonyl-amino, N-Acetyl-N-methylsulfonyl-amino, N-Propionyl-N-methylsulfonyl-amino, N-n-Butyroyl-N-methylsulfonyl-amino, N-i-Butyroyl-N-methylsulfonyl-amino, N-Acetyl-N-ethylsulfonyl-amino, N-Propionyl-N-ethylsulfonyl-amino, N-n-Butyroyl-N-ethylsulfonyl-amino, N-i-Butyroyl-N-ethylsulfonyl-amino, oder für jeweils gegebenenfalls durch Cyano, Fluor, Chlor, Brom, Methyl, Ethyl, n- oder i-Propyl, n-, i-, s- oder t-Butyl, Trifluormethyl, Methoxy, Ethoxy, n-oder i-Propoxy, Difluormethoxy oder Trifluormethoxy substituiertes N-Phenylcarbonyl-N-methylsulfonyl-amino, N-Phenylcarbonyl-N-ethylsulfonyl-amino, N-Thienylcarbonyl-N-methylsulfonyl-amino oder N-Thienylcarbonyl-N-ethylsulfonyl-amino steht,
ausgenommen der Wirkstoff 2-(2,4-Dichlor-5-methylsulfonylaminophenyl)-4-difluormethyl-5-methyl-2,4-dihydro-3H-1,2,4-triazol-3-on (Sulfentrazone)
("Wirkstoffe der Gruppe 1") und
(b) zumindest ein N-Arylsulfonylamino(thio)carbonyltriazolin(thi)on der allgemeinen Formel (II) in welcher
Q² und Q³ jeweils für Sauerstoff oder Schwefel stehen,
R⁶ für jeweils gegebenenfalls durch Fluor, Chlor, Methoxy oder Ethoxy substituiertes Methyl, Ethyl, Methoxy oder Ethoxy, oder für Cyclopropyl steht,
R⁷ für Chlor, Brom, für jeweils gegebenenfalls durch Fluor, Chlor, Methoxy oder Ethoxy substituiertes Methyl, Ethyl, n- oder i-Propyl, Methoxy, Ethoxy, n- oder i-Propoxy, Methylthio, Ethylthio, n- oder i-Propylthio, Methylamino, Ethylamino, n- oder i-Propylamino, für Dimethylamino, Propenylthio, Propinylthio oder für Cyclopropyl steht,
R⁸ für Fluor, Chlor, Brom, für jeweils gegebenenfalls durch Fluor, Chlor, Methoxy oder Ethoxy substituiertes Methyl, Ethyl, n- oder i-Propyl, Methoxy, Ethoxy, n- oder i-Propoxy, Methoxycarbonyl, Ethoxycarbonyl, n- oder i-Propoxycarbonyl, Methylthio, Ethylthio, n- oder i-Propylthio, Methylsulfinyl, Ethylsulfinyl, n- oder i-Propylsulfinyl, Methylsulfonyl, Ethylsulfonyl, n- oder i-Propylsulfonyl, Methylamino, Ethylamino, n- oder i-Propylamino, oder für Cyclopropyl steht,
R⁹ für Wasserstoff, Nitro, Cyano, Fluor, Chlor, Brom, für jeweils gegebenenfalls durch Fluor, Chlor, Methoxy oder Ethoxy substituiertes Methyl, Ethyl, n- oder i-Propyl, Methoxy, Ethoxy, n- oder i-Propoxy, Methoxycarbonyl, Ethoxycarbonyl, n- oder i-Propoxycarbonyl, Methylthio, Ethylthio, n- oder i-Propylthio, Methylsulfinyl, Ethylsulfinyl, n- oder i-Propylsulfinyl, Methylsulfonyl, Ethylsulfonyl, n-oder i-Propylsulfonyl, oder für Cyclopropyl steht,
und/oder ein Salz einer Verbindung der Formel (II)
("Wirkstoffe der Gruppe 2").

4. Verfahren zum Herstellen eines herbiziden Mittels gemäß einem der Ansprüche 1 bis 3, **gekennzeichnet durch** Vermischen zumindest eines Wirkstoffs der Gruppe 1 mit zumindest einem Wirkstoff der Gruppe 2 und zumindest einem Streckmittel, gegebenenfalls unter Verwendung von zumindest einem oberflächenaktiven Mittel.

5. Verwendung eines herbiziden Mittels gemäß einem der Ansprüche 1 bis 3 zur Bekämpfung von unerwünschten Pflanzen.

## Claims

1. Herbicidal composition, **characterized in that** it contains an active compound combination comprising
(a) at least one N-aryl-triazolin(ethi)one of the general formula (I) 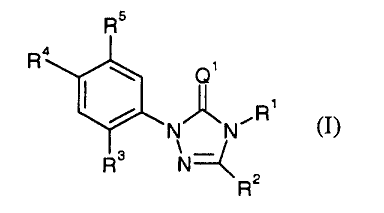 in which
Q¹ represents oxygen or sulphur,
R¹ represents optionally halogen-substituted alkyl having 1 to 5 carbon atoms,
R² represents optionally halogen-substituted alkyl having 1 to 5 carbon atoms,
R³ represents hydrogen or halogen,
R⁴ represents cyano, thiocarbamoyl or halogen, and
R⁵ represents nitro, cyano, carboxyl, carbamoyl, thiocarbamoyl, hydroxyl, mercapto, amino, hydroxyamino, aminosulphonyl, halogen, represents in each case optionally cyano-, hydroxyl-, C₁-C₄-alkoxy, C₁-C₄-alkyl-carbonyl- and/or C₁-C₄-alkoxy-carbonyl-substituted alkyl, alkoxy, alkylthio, alkylsulphinyl, alkylsulphonyl, alkylcarbonyl, alkoxycarbonyl or alkylamino having in each case 1 to 6 carbon atoms, represents in each case optionally cyano-, carboxyl-, halogen- and/or C₁-C₄-alkoxy-carbonyl-substituted alkenyl, alkinyl, alkenyloxy or alkinyloxy having in each case 2 to 6 carbon atoms, represents in each case optionally halogen-substituted alkylcarbonylamino, alkoxycarbonylamino, alkylsulphonylamino, N,N-bis-alkylsulphonyl-amino or N-alkylcarbonyl-N-alkylsulphonyl-amino having in each case 1 to 6 carbon atoms in the alkyl groups, or represents in each case optionally cyano-, halogen-, C₁-C₄-alkyl-, C₁-C₄-halogenoalkyl-, C₁-C₄-alkoxy- or C₁-C₄-halogenoalkoxy-substituted N-phenylcarbonyl-N-alkylsulphonylamino, N-pyridylcarbonyl-N-alkylsulphonyl-amino, N-furylcarbonyl-N-alkylsulphonyl-amino or N-thienylcarbonyl-N-alkylsulphonyl-amino having in each case 1 to 6 carbon atoms in the alkyl groups,
("active compounds of group 1") and
(b) at least one N-arylsulphonylamino(thio)carbonyl-triazolin(ethi)one of the general formula (II) 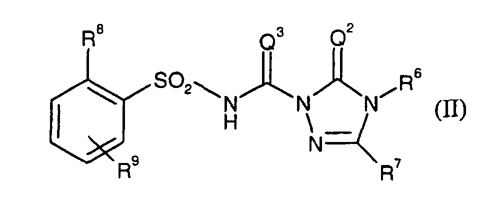 in which
Q² and Q³ each represent oxygen or sulphur,
R⁶ represents in each case optionally cyano-, halogen- or C₁-C₄-alkoxy-substituted alkyl, alkenyl, alkinyl, alkoxy, alkenyloxy, alkylamino or dialkylamino having in each case up to 6 carbon atoms, or represents in each case optionally cyano-, halogen- or C₁-C₄-alkyl-substituted cycloalkyl, cycloalkylalkyl or cycloalkylamino having in each case 3 to 6 carbon atoms in the cycloalkyl groups and optionally 1 to 4 carbon atoms in the alkyl moiety,
R⁷ represents hydrogen, represents halogen, represents in each case optionally cyano-, halogen- or C₁-C₄-alkoxy-substituted alkyl, alkoxy, alkylthio, alkylamino, dialkylamino, alkenyl, alkinyl, alkenyloxy, alkinyloxy, alkenylthio, alkinylthio, alkenylamino or alkinylamino having in each case up to 6 carbon atoms, or represents in each case optionally cyano-, halogen- or C₁-C₄-alkyl-substituted cycloalkyl, cycloalkyloxy, cycloalkylthio, cycloalkylamino or cycloalkylalkyl having in each case 3 to 6 carbon atoms in the cycloalkyl groups and optionally 1 to 4 carbon atoms in the alkyl moiety,
R⁸ represents nitro, cyano, halogen, phenyl, phenoxy, represents in each case optionally cyano-, halogen- or C₁-C₄-alkoxy-substituted alkyl, alkylcarbonyl, alkoxy, alkoxycarbonyl, alkylthio, alkylsulphinyl, alkylsulphonyl, dialkylaminosulphonyl, alkylamino, alkenyl, alkenyloxy, alkenylthio, alkenylamino, alkinyl, alkinyloxy, alkinylthio having in each case up to 6 carbon atoms, or represents in each case optionally cyano-, halogen- or C₁-C₄-alkyl-substituted cycloalkyl, cycloalkyloxy, cycloalkylthio, cycloalkylamino having in each case 3 to 6 carbon atoms in the cycloalkyl groups, and
R⁹ represents hydrogen, nitro, cyano, halogen, phenyl, phenoxy, represents in each case optionally cyano-, halogen- or C₁-C₄-alkoxy-substituted alkyl, alkylcarbonyl, alkoxy, alkoxycarbonyl, alkylthio, alkylsulphinyl, alkylsulphonyl, alkylamino, alkenyl, alkenyloxy, alkenylthio, alkenylamino, alkinyl, alkinyloxy or alkinylthio having in each case up to 6 carbon atoms, or represents in each case optionally cyano-, halogen- or C₁-C₄-alkyl-substituted cycloalkyl, cycloalkyloxy, cycloalkylthio, cycloalkylamino having in each case 3 to 6 carbon atoms in the cycloalkyl groups,
and/or a salt of a compound of the formula (II)
("active compounds of group 2").

2. Herbicidal composition according to Claim 1, **characterized in that** it contains an active compound combination comprising
(a) at least one N-aryl-triazolin(ethi)one of the general formula (I), in which
Q¹ represents oxygen or sulphur,
R¹ represents in each case optionally fluorine- and/or chlorine-substituted methyl, ethyl, n- or i-propyl, n-, i-, s- or t-butyl,
R² represents in each case optionally fluorine- and/or chlorine-substituted methyl, ethyl, n- or i-propyl, n-, i-, s- or t-butyl,
R³ represents hydrogen, fluorine, chlorine or bromine,
R⁴ represents cyano, thiocarbamoyl, fluorine, chlorine or bromine, and
R⁵ represents nitro, cyano, carboxyl, carbamoyl, thiocarbamoyl, hydroxyl, mercapto, amino, hydroxyamino, aminosulphonyl, fluorine, chlorine, bromine, represents in each case optionally cyano-, hydroxyl-, methoxy-, ethoxy-, acetyl-, propionyl-, methoxycarbonyl- and/or ethoxy-carbonyl-substituted methyl, ethyl, n- or i-propyl, n-, i-, s- or t-butyl, methoxy, ethoxy, n- or i-propoxy, n-, i-, s- or t-butoxy, methylthio, ethylthio, n- or i-propylthio, n-, i-, s- or t-butylthio, methylsulphinyl, ethylsulphinyl, methylsulphonyl, ethylsulphonyl, acetyl, propionyl, n- or i-butyroyl, methoxycarbonyl, ethoxycarbonyl, n- or i-propoxycarbonyl, methylamino, ethylamino, n- or i-propylamino, n-, i-, s- or t-butylamino, represents in each case optionally cyano-, carboxyl-, fluorine-, chlorine-, bromine-, methoxycarbonyl- and/or ethoxycarbonyl-substituted ethenyl, propenyl, butenyl, ethinyl, propinyl, butinyl, propenyloxy, butenyloxy, propinyloxy or butinyloxy, represents in each case optionally fluorine- and/or chlorine-substituted acetylamino, propionylamino, methoxycarbonylamino, ethoxycarbonylamino, methylsulphonylamino, ethylsulphonylamino, n- or i-propylsulphonylamino, n-, i-, s- or t-butylsulphonylamino, N,N-bis-methylsulphonyl-amino, N,N-bis-ethylsulphonyl-amino, N-ethylsulphonyl-N-methylsulphonyl-amino, N-acetyl-N-methylsulphonyl-amino, N-propionyl-N-methylsulphonyl-amino, N-n-butyroyl-N-methylsulphonyl-amino, N-i-butyroyl-N-methylsulphonyl-amino, N-acetyl-N-ethylsulphonyl-amino, N-propionyl-N-ethylsulphonyl-amino, N-n-butyroyl-N-ethylsulphonyl-amino, N-i-butyroyl-N-ethylsulphonyl-amino, or represents in each case optionally cyano-, fluorine-, chlorine-, bromine-, methyl-, ethyl-, nor i-propyl-, n-, i-, s- or t-butyl-, trifluoromethyl-, methoxy-, ethoxy, n- or i-propoxy-, difluoromethoxy- or trifluoromethoxy-substituted N-phenylcarbonyl-N-methylsulphonyl-amino, N-phenylcarbonyl-N-ethylsulphonyl-amino, N-thienylcarbonyl-N-methylsulphonyl-amino or N-thienylcarbonyl-N-ethylsulphonyl-amino,
("active compounds of group 1") and
(b) at least one N-arylsulphonylamino(thio)carbonyltriazolin(ethi)one of the general formula (II) in which
Q² and Q³ each represent oxygen or sulphur,
R⁶ represents in each case optionally cyano-, fluorine-, chlorine-, methoxy- or ethoxy-substituted methyl, ethyl, n- or i-propyl, n-, i-, s- or t-butyl, ethenyl, propenyl, butenyl, ethinyl, propinyl, butinyl, methoxy, ethoxy, n- or i-propoxy, n-, i-, s- or t-butoxy, propenyloxy, butenyloxy, methylamino, ethylamino, n- or i-propylamino, n-, i-, s- or t-butylamino, dimethylamino or diethylamino, or represents in each case optionally cyano-, fluorine-, chlorine-, bromine-, methyl-, ethyl-, n- or i-propyl-substituted cyclopropyl, cyclobutyl, cyclopentyl, cyclohexyl, cyclopropylmethyl, cyclobutylmethyl, cyclopentylmethyl, cyclohexylmethyl, cyclopropylamino, cyclobutylamino, cyclopentylamino or cyclohexylamino,
R⁷ represents fluorine, chlorine, bromine, represents in each case optionally cyano-, fluorine-, chlorine-, methoxy- or ethoxy-substituted methyl, ethyl, n- or i-propyl, n-, i-, s- or t-butyl, methoxy, ethoxy, n- or i-propoxy, n-, i-, s- or t-butoxy, methylthio, ethylthio, n- or i-propylthio, n-, i-, s- or t-butylthio, methylamino, ethylamino, n- or i-propylamino, n-, i-, s- or t-butylamino, dimethylamino, diethylamino, ethenyl, propenyl, butenyl, ethinyl, propinyl, butinyl, ethenyloxy, propenyloxy, butenyloxy, propinyloxy, butinyloxy, ethenylthio, propenylthio, butenylthio, propinylthio, butinylthio, propenylamino, butenylamino, propinylamino or butinylamino, or represents in each case optionally cyano-, fluorine-, chlorine-, bromine-, methyl-, ethyl-, n- or i-propyl-substituted cyclopropyl, cyclobutyl, cyclopentyl, cyclohexyl, cyclopropyloxy, cyclobutyloxy, cyclopentyloxy, cyclohexyloxy, cyclopropylthio, cyclobutylthio, cyclopentylthio, cyclohexylthio, cyclopropylamino, cyclobutylamino, cyclopentylamino, cyclohexylamino, cyclopropylmethyl, cyclobutylmethyl, cyclopentylmethyl or cyclohexylmethyl,
R⁸ represents nitro, cyano, fluorine, chlorine, bromine, represents in each case optionally cyano-, fluorine-, chlorine-, methoxy- or ethoxy-substituted methyl, ethyl, n- or i-propyl, n-, i-, s- or t-butyl, acetyl, propionyl, n- or i-butyroyl, methoxy, ethoxy, n- or i-propoxy, n-, i-, s- or t-butoxy, methoxycarbonyl, ethoxycarbonyl, nor i-propoxycarbonyl, methylthio, ethylthio, n- or i-propylthio, n-, i-, s- or t-butylthio, methylsulphinyl, ethylsulphinyl, n- or i-propylsulphinyl, methylsulphonyl, ethylsulphonyl, n- or i-propylsulphonyl, methylamino, ethylamino, n- or i-propylamino, n-, i-, s- or t-butylamino, ethenyl, propenyl, butenyl, propenyloxy, butenyloxy, propenylthio, butenylthio, propenylamino, butenylamino, ethinyl, propinyl, butinyl, propinyloxy, butinyloxy, propinylthio or butinylthio, or represents in each case optionally cyano-, fluorine-, chlorine-, bromine-, methyl-, ethyl-, n- or i-propyl-substituted cyclopropyl, cyclobutyl, cyclopentyl, cyclohexyl, cyclopropyloxy, cyclobutyloxy, cyclopentyloxy, cyclohexyloxy, cyclopropylthio, cyclobutylthio, cyclopentylthio, cyclohexylthio, cyclopropylamino, cyclobutylamino, cyclopentylamino or cyclohexylamino,
R⁹ represents hydrogen, nitro, cyano, fluorine, chlorine, bromine, represents in each case optionally cyano-, fluorine-, chlorine-, methoxy- or ethoxy-substituted methyl, ethyl, n- or i-propyl, n-, i-, s- or t-butyl, acetyl, propionyl, n- or i-butyroyl, methoxy, ethoxy, nor i-propoxy, n-, i-, s- or t-butoxy, methoxycarbonyl, ethoxycarbonyl, n- or i-propoxycarbonyl, methylthio, ethylthio, n- or i-propylthio, n-, i-, s- or t-butylthio, methylsulphinyl, ethylsulphinyl, n- or i-propylsulphinyl, methylsulphonyl, ethylsulphonyl, n- or i-propylsulphonyl, methylamino, ethylamino, n- or i-propylamino, n-, i-, s- or t-butylamino, ethenyl, propenyl, butenyl, propenyloxy, butenyloxy, propenylthio, butenylthio, propenylamino, butenylamino, ethinyl, propinyl, butinyl, propinyloxy, butinyloxy, propinylthio or butinylthio, or represents in each case optionally cyano-, fluorine-, chlorine-, bromine-, methyl-, ethyl-, n- or i-propyl-substituted cyclopropyl, cyclobutyl, cyclopentyl, cyclohexyl, cyclopropyloxy, cyclobutyloxy, cyclopentyloxy, cyclohexyloxy, cyclopropylthio, cyclobutylthio, cyclopentylthio, cyclohexylthio, cyclopropylamino, cyclobutylamino, cyclopentylamino or cyclohexylamino,
an/or a salt of a compound of the formula (II)
("active compounds of group 2").

3. Herbicidal composition according to Claim 1 by a content of an active compound combination comprising
(a) at least one N-aryl-triazolin(ethi)one of the general formula (I), in which
Q¹ represents oxygen or sulphur,
R¹ represents methyl, ethyl or difluoromethyl,
R² represents methyl, ethyl, difluoromethyl, trifluoromethyl, fluoroethyl, difluoroethyl, trifluoroethyl, tetrafluoroethyl or pentafluoroethyl,
R³ represents fluorine or chlorine,
R⁴ represents cyano, thiocarbamoyl, chlorine or bromine, and
R⁵ represents nitro, cyano, carboxyl, carbamoyl, thiocarbamoyl, hydroxyl, mercapto, amino, fluorine, chlorine, bromine, represents in each case optionally cyano-, methoxy-, ethoxy-, methoxycarbonyl- and/or ethoxycarbonyl-substituted methyl, ethyl, n- or i-propyl, methoxy, ethoxy, n- or i-propoxy, methylthio, ethylthio, n- or i-propylthio, methylsulphinyl, ethylsulphinyl, methylsulphonyl, ethylsulphonyl, methoxycarbonyl, ethoxycarbonyl, n- or i-propoxycarbonyl, methylamino, ethylamino, n- or i-propylamino, represents in each case optionally cyano-, carboxyl-, fluorine-, chlorine-, bromine-, methoxycarbonyl- and/or ethoxycarbonyl-substituted ethenyl or propenyl, represents propenyloxy, butenyloxy, propinyloxy or butinyloxy, represents in each case optionally fluorine- and/or chlorine-substituted methylsulphonylamino, ethylsulphonylamino, n- or i-propylsulphonylamino, n-, i-, s- or t-butylsulphonylamino, N,N-bis-methylsulphonyl-amino, N,N-bis-ethylsulphonyl-amino, N-ethylsulphonyl-N-methylsulphonyl-amino, N-acetyl-N-methylsulphonyl-amino, N-propionyl-N-methylsulphonyl-amino, N-n-butyroyl-N-methylsulphonyl-amino, N-i-butyroyl-N-methylsulphonyl-amino, N-acetyl-N-ethylsulphonyl-amino, N-propionyl-N-ethylsulphonyl-amino, N-n-butyroyl-N-ethylsulphonyl-amino, N-i-butyroyl-N-ethylsulphonyl-amino, or represents in each case optionally cyano-, fluorine-, chlorine-, bromine-, methyl-, ethyl-, n- or i-propyl-, n-, i-, s- or t-butyl-, trifluoromethyl-, methoxy-, ethoxy-, n- or i-propoxy-, difluoromethoxy- or trifluoromethoxy-substituted N-phenylcarbonyl-N-methylsulphonyl-amino, N-phenylcarbonyl-N-ethylsulphonylamino, N-thienylcarbonyl-N-methylsulphonyl-amino or N-thienylcarbonyl-N-ethylsulphonyl-amino,
("active compounds of group 1") and
(b) at least one N-arylsulphonylamino(thio)carbonyltriazolin(ethi)one of the general formula (II) in which
Q² and Q³ each represent oxygen or sulphur,
R⁶ represents in each case optionally fluorine-, chlorine-, methoxy- or ethoxy-substituted methyl, ethyl, methoxy or ethoxy, or represents cyclopropyl,
R⁷ represents chlorine, bromine, represents in each case optionally fluorine-, chlorine-, methoxy- or ethoxy-substituted methyl, ethyl, n- or i-propyl, methoxy, ethoxy, n- or i-propoxy, methylthio, ethylthio, n- or i-propylthio, methylamino, ethylamino, n- or i-propylamino, represents dimethylamino, propenylthio, propinylthio or represents cyclopropyl,
R⁸ represents fluorine, chlorine, bromine, represents in each case optionally fluorine-, chlorine-, methoxy- or ethoxy-substituted methyl, ethyl, n- or i-propyl, methoxy, ethoxy, n- or i-propoxy, methoxycarbonyl, ethoxycarbonyl, n- or i-propoxycarbonyl, methylthio, ethylthio, n- or i-propylthio, methylsulphinyl, ethylsulphinyl, n- or i-propylsulphinyl, methylsulphonyl, ethylsulphonyl, n- or i-propylsulphonyl, methylamino, ethylamino, n- or i-propylamino, or represents cyclopropyl,
R⁹ represents hydrogen, nitro, cyano, fluorine, chlorine, bromine, represents in each case optionally fluorine-, chlorine-, methoxy- or ethoxy-substituted methyl, ethyl, n- or i-propyl, methoxy, ethoxy, nor i-propoxy, methoxycarbonyl, ethoxycarbonyl, n- or i-propoxycarbonyl, methylthio, ethylthio, n- or i-propylthio, methylsulphinyl, ethylsulphinyl, n- or i-propylsulphinyl, methylsulphonyl, ethylsulphonyl, n- or i-propylsulphonyl, or represents cyclopropyl,
and/or a salt of a compound of the formula (II)
("active compounds of group 2").

4. Process for preparing a herbicidal composition according to any of Claims 1 to 3, **characterized in that** at least one active compound of group 1 is mixed with at least one active compound of group 2 and at least one extender, if appropriate using at least one surface-active agent.

5. Use of a herbicidal composition according to any of Claims 1 to 3 for controlling undesirable plants.

## Revendications

1. Agent herbicide, **caractérisé par** une teneur en une combinaison de substances actives comprenant
(a) au moins une N-aryl-triazolin(thi)one répondant à la formule générale (I) 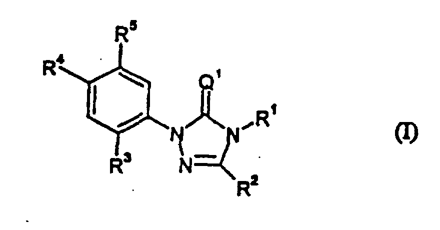 dans laquelle
Q¹ représente un atome d'oxygène ou un atome de soufre,
R¹ représente un groupe alkyle contenant de 1 à 5 atomes de carbone, portant, le cas échéant, un ou plusieurs substituants halogéno identiques ou différents,
R² représente un groupe alkyle contenant de 1 à 5 atomes de carbone, portant, le cas échéant, un ou plusieurs substituants halogéno identiques ou différents,
R³ représente un atome d'hydrogène ou un atome d'halogène,
R⁴ représente un groupe cyano, un groupe thiocarbamoyle ou un atome d'halogène, et
R⁵ représente un groupe nitro, un groupe cyano, un groupe carboxyle, un groupe carbamoyle, un groupe thiocarbamoyle, un groupe hydroxyle, un groupe mercapto, un groupe amino, un groupe hydroxylamino, un groupe aminosulfonyle, un atome d'halogène ; un groupe alkyle, un groupe alcoxy, un groupe alkylthio, un groupe alkylsulfinyle, un groupe alkylsulfonyle, un groupe alkylcarbonyle, un groupe alcoxycarbonyle ou un groupe alkylamino, contenant respectivement de 1 à 6 atomes de carbone, chacun de ces groupes portant, le cas échéant, un ou plusieurs substituants identiques ou différents cyano, hydroxyle, alcoxy en C₁-C₄, alkyl(en C₁-C₄)carbonyle et/ou alcoxy(en C₁-C₄)carbonyle ; un groupe alcényle, un groupe alcynyle, un groupe alcényloxy ou un groupe alcynyloxy, contenant respectivement de 2 à 6 atomes de carbone, chacun de ces groupes portant, le cas échéant, un ou plusieurs substituants identiques ou différents cyano, carboxyle, halogéno et/ou alcoxy(en C₁-C₄)-carbonyle ; un groupe alkylcarbonylamino, un groupe alcoxycarbonylamino, un groupe alkylsulfonylamino, un groupe N,N-bis-alkylsulfonylamino ou un groupe N-alkylcarbonyl-N-alkylsulfonylamino contenant respectivement de 1 à 6 atomes de carbone dans les groupes alkyle, chacun de ces groupes portant, le cas échéant, un ou plusieurs substituants halogéno identiques ou différents ; ou représente un groupe N-phénylcarbonyl-N-alkylsulfonylamino, un groupe N-pyridylcarbonyl-N-alkylsulfonylamino, un groupe N-furylcarbonyl-N-alkylsulfonylamino ou un groupe N-thiénylcarbonyl-N-alkylsulfonylamino contenant respectivement de 1 à 6 atomes de carbone dans les groupes alkyle, chacun de ces groupes portant, le cas échéant, un ou plusieurs substituants identiques ou différents cyano, halogéno, alkyle en C₁-C₄, halogénalkyle en C₁-C₄, alcoxy en C₁-C₄, halogénalcoxy en C₁-C₄,
à l'exception de la substance active 2-(2,4-dichloro-5-méthylsulfonylaminophényl)-4-difluoro-méthyl-5-méthyl-2,4-dihydro-3H-1,2,4-triazol-3-one (Sulfentrazone)
("substances actives du groupe 1") et
(b) au moins une N-arylsulfonylamino(thio)-carbonyl-triazolin(thi)one répondant à la formule générale (II) 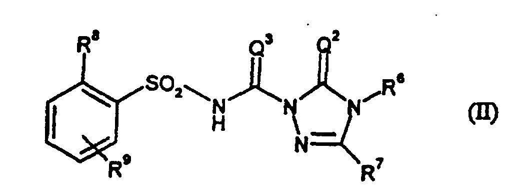 dans laquelle
Q² et Q³ représentent respectivement un atome d'oxygène ou un atome de soufre,
R⁶ représente un groupe alkyle, un groupe alcényle, un groupe alcynyle, un groupe alcoxy, un groupe alcényloxy, un groupe alkylamino ou un groupe dialkylamino contenant respectivement jusqu'à 6 atomes de carbone, chacun de ces groupes portant, le cas échéant, un ou plusieurs substituants identiques ou différents cyano, halogéno ou alcoxy en C₁-C₄ ; ou représente un groupe cycloalkyle, un groupe cycloalkylalkyle ou un groupe cycloalkylamino contenant respectivement de 3 à 6 atomes de carbone dans les groupes cycloalkyle et, le cas échéant, de 1 à 4 atomes de carbone dans la fraction alkyle, chacun de ces groupes portant, le cas échéant, un ou plusieurs substituants identiques ou différents cyano, halogéno ou alkyle en C₁-C₄,
R⁷ représente un atome d'hydrogène ; un atome d'halogène ; un groupe alkyle, un groupe alcoxy, un groupe alkylthio, un groupe alkylamino, un groupe dialkylamino, un groupe alcényle, un groupe alcynyle, un groupe alcényloxy, un groupe alcynyloxy, un groupe alcénylthio, un groupe alcynylthio, un groupe alcénylamino ou un groupe alcynylamino contenant respectivement jusqu'à 6 atomes de carbone, chacun de ces groupes portant, le cas échéant, un ou plusieurs substituants identiques ou différents cyano, halogéno ou alcoxy en C₁-C₄ ; ou représente un groupe cycloalkyle, un groupe cycloalkyloxy, un groupe cycloalkylthio, un groupe cycloalkylamino ou un groupe cycloalkylalkyle contenant respectivement de 3 à 6 atomes de carbone dans les groupes cycloalkyle et, le cas échéant, de 1 à 4 atomes de carbone dans la fraction alkyle, chacun de ces groupes portant, le cas échéant, un ou plusieurs substituants identiques ou différents cyano, halogéno ou alkyle en C₁-C₄,
R⁸ représente un groupe nitro, un groupe cyano, un atome d'halogène, un groupe phényle, un groupe phénoxy ; un groupe alkyle, un groupe alkylcarbonyle, un groupe alcoxy, un groupe alcoxycarbonyle, un groupe alkylthio, un groupe alkylsulfinyle, un groupe alkylsulfonyle, un groupe dialkylaminosulfonyle, un groupe alkylamino, un groupe alcényle, un groupe alcényloxy, un groupe alcénylthio, un groupe alcénylamino, un groupe alcynyle, un groupe alcynyloxy, un groupe alcynylthio contenant respectivement jusqu'à 6 atomes de carbone, chacun de ces groupes portant, le cas échéant, un ou plusieurs substituants identiques ou différents cyano, halogéno ou alcoxy en C₁-C₄ ; ou représente un groupe cycloalkyle, un groupe cycloalcoxy, un groupe cycloalkylthio, un groupe cycloalkylamino contenant respectivement de 3 à 6 atomes de carbone dans les groupes cycloalkyle, chacun de ces groupes portant, le cas échéant, un ou plusieurs substituants identiques ou différents cyano, halogéno ou alkyle en C₁-C₄,
R⁹ représente un atome d'hydrogène, un groupe nitro, un groupe cyano, un atome d'halogène, un groupe phényle, un groupe phénoxy ; un groupe alkyle, un groupe alkylcarbonyle, un groupe alcoxy, un groupe alcoxycarbonyle, un groupe alkylthio, un groupe alkylsulfinyle, un groupe alkylsulfonyle, un groupe alkylamino, un groupe alcényle, un groupe alcényloxy, un groupe alcénylthio, un groupe alcénylamino, un groupe alcynyle, un groupe alcynyloxy ou un groupe alcynylthio contenant respectivement jusqu'à 6 atomes de carbone, chacun de ces groupes portant, le cas échéant, un ou plusieurs substituants identiques ou différents cyano, halogéno ou alcoxy en C₁-C₄ ; ou représente un groupe cycloalkyle, un groupe cycloalkyloxy, un groupe cycloalkylthio, un groupe cycloalkylamino contenant respectivement de 3 à 6 atomes de carbone dans les groupes cycloalkyle, chacun de ces groupes portant, le cas échéant, un ou plusieurs substituants identiques ou différents cyano, halogéno ou alkyle en C₁-C₄,
et/ou un sel d'un composé répondant à la formule (II)
("substances actives du groupe 2").

2. Agent herbicide selon la revendication 1,
**caractérisé par** une teneur en une combinaison de substances actives comprenant
(a) au moins une N-aryl-triazolin(thi)one répondant à la formule générale (I) dans laquelle
Q¹ représente un atome d'oxygène ou un atome de soufre,
R¹ représente un groupe méthyle, un groupe éthyle, un groupe n- ou i-propyle, un groupe n-, i-, s- ou t-butyle, chacun de ces groupes portant, le cas échéant, un ou plusieurs substituants identiques ou différents fluoro et/ou chloro,
R² représente un groupe méthyle, un groupe éthyle, un groupe n- ou i-propyle, un groupe n-, i-, s- ou t-butyle, chacun de ces groupes portant, le cas échéant, un ou plusieurs substituants identiques ou différents fluoro et/ou chloro,
R³ représente un atome d'hydrogène, un atome de fluor, un atome de chlore ou un atome de brome,
R⁴ représente un groupe cyano, un groupe thiocarbamoyle, un atome de fluor, un atome de chlore ou un atome de brome, et
R⁵ représente un groupe nitro, un groupe cyano, un groupe carboxyle, un groupe carbamoyle, un groupe thiocarbamoyle, un groupe hydroxyle, un groupe mercapto, un groupe amino, un groupe hydroxylamino, un groupe aminosulfonyle, un atome de fluor, un atome de chlore, un atome de brome ; un groupe méthyle, un groupe éthyle, un groupe n- ou i-propyle, un groupe n-, i-, s- ou t-butyle, un groupe méthoxy, un groupe éthoxy, un groupe n- ou i-propoxy, un groupe n-, i-, s- ou t-butoxy, un groupe méthylthio, un groupe éthylthio, un groupe n-ou i-propylthio, un groupe n-, i-, s- ou t-butylthio, un groupe méthylsulfinyle, un groupe éthylsulfinyle, un groupe méthylsulfonyle, un groupe éthylsulfonyle, un groupe acétyle, un groupe propionyle, un groupe n- ou i-butyroyle, un groupe méthoxycarbonyle, un groupe éthoxycarbonyle, un groupe n- ou i-propoxycarbonyle, un groupe méthylamino, un groupe éthylamino, un groupe n- ou i-propylamino, un groupe n-, i-, s- ou t-butylamino, chacun de ces groupes portant, le cas échéant, un ou plusieurs substituants identiques ou différents cyano, hydroxyle, méthoxy, éthoxy, acétyle, propionyle, méthoxycarbonyle et/ou éthoxycarbonyle ; un groupe éthényle, un groupe propényle, un groupe butényle, un groupe éthynyle, un groupe propynyle, un groupe butynyle, un groupe propényloxy, un groupe butényloxy, un groupe propynyloxy ou un groupe butynyloxy, chacun de ces groupes portant, le cas échéant, un ou plusieurs substituants identiques ou différents cyano, carboxyle, fluoro, chloro, bromo, méthoxycarbonyle et/ou éthoxycarbonyle ; un groupe acétylamino, un groupe propionylamino, un groupe méthoxycarbonylamino, un groupe éthoxycarbonylamino, un groupe méthylsulfonylamino, un groupe éthylsulfonylamino, un groupe n- ou i-propylsulfonylamino, un groupe n-, i-, s- ou t-butylsulfonylamino, un groupe N,N-bis-méthylsulfonylamino, un groupe N,N-bis-éthylsulfonylamino, un groupe N-éthylsulfonyl-N-méthylsulfonylamino, un groupe N-acétyl-N-méthylsulfonylamino, un groupe N-propionyl-N-méthylsulfonylamino, un groupé N-n-butyroyl-N-méthylsulfonylamino, un groupe N-i-butyroyl-N-méthylsulfonylamino, un groupe N-acétyl-N-éthylsulfonylamino, un groupe N-propionyl-N-éthylsulfonylamino, un groupe N-n-butyroyl-N-éthylsulfonylamino, un groupe N-i-butyroyl-N-éthylsulfonylamino, chacun de ces groupes portant, le cas échéant, un ou plusieurs substituants identiques ou différents fluoro et/ou chloro ; ou représente un groupe N-phénylcarbonyl-N-méthylsulfonylamino, un groupe N-phénylcarbonyl-N-éthylsulfonylamino, un groupe N-thiénylcarbonyl-N-méthylsulfonylamino ou un groupe N-thiénylcarbonyl-N-éthylsulfonylamino, chacun de ces groupes portant, le cas échéant, un ou plusieurs substituants identiques ou différents cyano, fluoro, chloro, bromo, méthyle, éthyle, n- ou i-propyle, n-, i,- s- ou t-butyle, trifluorométhyle, méthoxy, éthoxy, n- ou i-propoxy, difluorométhoxy ou trifluorométhoxy,
à l'exception de la substance active 2-(2,4-dichloro-5-méthylsulfonylaminophényl)-4-difluorométhyl-5-méthyl-2,4-dihydro-3H-1,2,4-triazol-3-one (Sulfentrazone)
("substances actives du groupe 1") et
(b) au moins une N-arylsulfonylamino(thio)-carbonyl-triazolin(thi)one répondant à la formule générale (II) dans laquelle
Q² et Q³ représentent respectivement un atome d'oxygène ou un atome de soufre,
R⁶ représente un groupe méthyle, un groupe éthyle, un groupe n- ou i-propyle, un groupe n-, i-, s- ou t-butyle, un groupe éthényle, un groupe propényle, un groupe butényle, un groupe éthynyle, un groupe propynyle, un groupe butynyle, un groupe méthoxy, un groupe éthoxy, un groupe n- ou i-propoxy, un groupe n-, i-, s- ou t-butoxy, un groupe propényloxy, un groupe butényloxy, un groupe méthylamino, un groupe éthylamino, un groupe n- ou i-propylamino, un groupe n-, i-, s- ou t-butylamino, un groupe diméthylamino ou un groupe diéthylamino, chacun de ces groupes portant, le cas échéant, un ou plusieurs substituants identiques ou différents cyano, fluoro, chloro, méthoxy ou éthoxy ; ou représente un groupe cyclopropyle, un groupe cyclobutyle, un groupe cyclopentyle, un groupe cyclohexyle, un groupe cyclopropylméthyle, un groupe cyclobutylméthyle, un groupe cyclopentylméthyle, un groupe cyclohexylméthyle, un groupe cyclopropylamino, un groupe cyclobutylamino, un groupe cyclopentylamino ou un groupe cyclohexylamino, chacun de ces groupes portant, le cas échéant, un ou plusieurs substituants identiques ou différents cyano, fluoro, chloro, bromo, méthyle, éthyle, n- ou i-propyle,
R⁷ représente un atome de fluor, un atome de chlore, un atome de brome ; un groupe méthyle, un groupe éthyle, un groupe n- ou i-propyle, un groupe n-, i-, s- ou t-butyle, un groupe méthoxy, un groupe éthoxy, un groupe n- ou i-propoxy, un groupe n-, i-, s- ou t-butoxy, un groupe méthylthio, un groupe éthylthio, un groupe n- ou i-propylthio, un groupe n-, i-, s- ou t-butylthio, un groupe méthylamino, un groupe éthylamino, un groupe n- ou i-propylamino, un groupe n-, i-, s- ou t-butylamino, un groupe diméthylamino, un groupe diéthylamino, un groupe éthényle, un groupe propényle, un groupe butényle, un groupe éthynyle, un groupe propynyle, un groupe butynyle, un groupe éthényloxy, un groupe propényloxy, un groupe butényloxy, un groupe propynyloxy, un groupe butynyloxy, un groupe éthénylthio, un groupe propénylthio, un groupe buténylthio, un groupe propynylthio, un groupe butynylthio, un groupe propénylamino, un groupe buténylamino, un groupe propynylamino ou un groupe butynylamino, chacun de ces groupes portant, le cas échéant, un ou plusieurs substituants identiques ou différents cyano, fluoro, chloro, méthoxy ou éthoxy ; ou représente un groupe cyclopropyle, un groupe cyclobutyle, un groupe cyclopentyle, un groupe cyclohexyle, un groupe cyclopropyloxy, un groupe cyclobutyloxy, un groupe cyclopentyloxy, un groupe cyclohexyloxy, un groupe cyclopropylthio, un groupe cyclobutylthio, un groupe cyclopentylthio, un groupe cyclohexylthio, un groupe cyclopropylamino, un groupe cyclobutylamino, un groupe cyclopentylamino, un groupe cyclohexylamino, un groupe cyclopropylméthyle, un groupe cyclobutylméthyle, un groupe cyclopentylméthyle ou un groupe cyclohexylméthyle, chacun de ces groupes portant, le cas échéant, un ou plusieurs substituants identiques ou différents cyano, fluoro, chloro, bromo, méthyle, éthyle, n- ou i-propyle,
R⁸ représente un groupe nitro, un groupe cyano, un atome de fluor, un atome de chlore, un atome de brome ; un groupe méthyle, un groupe éthyle, un groupe n- ou i-propyle, un groupe n-, i-, s- ou t-butyle, un groupe acétyle, un groupe propionyle, un groupe n- ou i-butyroyle, un groupe méthoxy, un groupe éthoxy, un groupe n- ou i-propoxy, un groupe n-, i-, s- ou t-butoxy, un groupe méthoxycarbonyle, un groupe éthoxycarbonyle, un groupe n- ou i-propoxycarbonyle, un groupe méthylthio, un groupe éthylthio, un groupe n-ou i- propylthio, un groupe n-, i-, s- ou t-butylthio, un groupe méthylsulfinyle, un groupe éthylsulfinyle, un groupe n- ou i-propylsulfinyle, un groupe méthylsulfonyle, un groupe éthylsulfonyle, un groupe n- ou i-propylsulfonyle, un groupe méthylamino, un groupe éthylamino, un groupe n- ou i-propylamino, un groupe n-, i-, s- ou t-butylamino, un groupe éthényle, un groupe propényle, un groupe butényle, un groupe propényloxy, un groupe butényloxy, un groupe propénylthio, un groupe buténylthio, un groupe propénylamino, un groupe buténylamino, un groupe éthynyle, un groupe propynyle, un groupe butynyle, un groupe propynyloxy, un groupe butynyloxy, un groupe propynylthio ou un groupe butynylthio, chacun de ces groupes portant, le cas échéant, un ou plusieurs substituants identiques ou différents cyano, fluoro, chloro, méthoxy ou éthoxy ; ou représente un groupe cyclopropyle, un groupe cyclobutyle, un groupe cyclopentyle, un groupe cyclohexyle, un groupe cyclopropyloxy, un groupe cyclobutyloxy, un groupe cyclopentyloxy, un groupe cyclohexyloxy, un groupe cyclopropylthio, un groupe cyclobutylthio, un groupe cyclopentylthio, un groupe cyclohexylthio, un groupe cyclopropylamino, un groupe cyclobutylamino, un groupe cyclopentylamino ou un groupe cyclohexylamino, chacun de ces groupes portant, le cas échéant, un ou plusieurs substituants identiques ou différents cyano, fluoro, chloro, bromo, méthyle, éthyle, n- ou i-propyle,
R⁹ représente un atome d'hydrogène, un groupe nitro, un groupe cyano, un atome de fluor, un atome de chlore, un atome de brome ; un groupe méthyle, un groupe éthyle, un groupe n- ou i-propyle, un groupe n-, i-, s- ou t-butyle, un groupe acétyle, un groupe propionyle, un groupe n- ou i-butyroyle, un groupe méthoxy, un groupe éthoxy, un groupe n- ou i-propoxy, un groupe n-, i-, s- ou t-butoxy, un groupe méthoxycarbonyle, un groupe éthoxycarbonyle, un groupe n- ou i-propoxycarbonyle, un groupe méthylthio, un groupe éthylthio, un groupe n-ou i-propylthio, un groupe n-, i-, s- ou t-butylthio, un groupe méthylsulfinyle, un groupe éthylsulfinyle, un groupe n- ou i-propylsulfinyle, un groupe méthylsulfonyle, un groupe éthylsulfonyle, un groupe n- ou i-propylsulfonyle, un groupe méthylamino, un groupe éthylamino, un groupe n- ou i-propylamino, un groupe n-, i-, s- ou t-butylamino, un groupe éthényle, un groupe propényle, un groupe butényle, un groupe propényloxy, un groupe butényloxy, un groupe propénylthio, un groupe buténylthio, un groupe propénylamino, un groupe buténylamino, un groupe éthynyle, un groupe propynyle, un groupe butynyle, un groupe propynyloxy, un groupe butynyloxy, un groupe propénylthio ou un groupe butynylthio, chacun de ces groupes portant, le cas échéant, un ou plusieurs substituants identiques ou différents cyano, fluoro, chloro, méthoxy ou éthoxy ; ou représente un groupe cyclopropyle, un groupe cyclobutyle, un groupe cyclopentyle, un groupe cyclohexyle, un groupe cyclopropyloxy, un groupe cyclobutyloxy, un groupe cyclopentyloxy, un groupe cyclohexyloxy, un groupe cyclopropylthio, un groupe cyclobutylthio, un groupe cyclopentylthio, un groupe cyclohexylthio, un groupe cyclopropylamino, un groupe cyclobutylamino, un groupe cyclopentylamino ou un groupe cyclohexylamino, chacun de ces groupes portant, le cas échéant, un ou plusieurs substituants identiques ou différents cyano, fluoro, chloro, bromo, méthyle, éthyle, n- ou i-propyle,
et/ou un sel d'un composé répondant à la formule (II)
("substances actives du groupe 2").

3. Agent herbicide selon la revendication 1, **caractérisé par** une teneur en une combinaison de substances actives comprenant
(a) au moins une N-aryl-triazolin(thi)one répondant à la formule générale (I) dans laquelle
Q¹ représente un atome d'oxygène ou un atome de soufre,
R¹ représente un groupe méthyle, un groupe éthyle ou un groupe difluorométhyle,
R² représente un groupe méthyle, un groupe éthyle, un groupe difluorométhyle, un groupe trifluorométhyle, un groupe fluoroéthyle, un groupe difluoroéthyle, un groupe trifluoroéthyle, un groupe tétrafluoroéthyle ou un groupe pentafluoroéthyle,
R³ représente un atome de fluor ou un atome de chlore,
R⁴ représente un groupe cyano, un groupe thiocarbamoyle, un atome de chlore ou un atome de brome, et
R⁵ représente un groupe nitro, un groupe cyano, un groupe carboxyle, un groupe carbamoyle, un groupe thiocarbamoyle, un groupe hydroxyle, un groupe mercapto, un groupe amino, un atome de fluor, un atome de chlore, un atome de brome ; un groupe méthyle, un groupe éthyle, un groupe n- ou i-propyle, un groupe méthoxy, un groupe éthoxy, un groupe n- ou i-propoxy, un groupe méthylthio, un groupe éthylthio, un groupe n-ou i-propylthio, un groupe méthylsulfinyle, un groupe éthylsulfinyle, un groupe méthylsulfonyle, un groupe éthylsulfonyle, un groupe méthoxycarbonyle, un groupe éthoxycarbonyle, un groupe n- ou i-propoxycarbonyle, un groupe méthylamino, un groupe éthylamino, un groupe n- ou i-propyl-amino, chacun de ces groupes portant, le cas échéant, un ou plusieurs substituants identiques ou différents cyano, méthoxy, éthoxy, méthoxycarbonyle et/ou éthoxycarbonyle ; un groupe éthényle ou un groupe propényle, chacun de ces groupes portant, le cas échéant, un ou plusieurs substituants identiques ou différents cyano, carboxyle, fluoro, chloro, bromo, méthoxycarbonyle et/ou éthoxycarbonyle ; un groupe propényloxy, un groupe butényloxy, un groupe propynyloxy ou un groupe butynyloxy ; un groupe méthylsulfonylamino, un groupe éthylsulfonylamino, un groupe n- ou i-propylsulfonylamino, un groupe n-, i-, s- ou t-butylsulfonylamino, un groupe N,N-bis-méthylsulfonylamino, un groupe N,N-bis-éthylsulfonylamino, un groupe N-éthylsulfonyl-N-méthylsulfonylamino, un groupe N-acétyl-N-méthylsulfonylamino, un groupe N-propionyl-N-méthylsulfonylamino, un groupe N-n-butyroyl-N-méthylsulfonylamino, un groupe N-i-butyroyl-N-méthylsulfonylamino, un groupe N-acétyl-N-éthylsulfonylamino, un groupe N-propionyl-N-éthylsulfonylamino, un groupe N-n-butyroyl-N-éthylsulfonylamino, un groupe N-i-butyroyl-N-éthylsulfonylamino, chacun de ces groupes portant, le cas échéant, un ou plusieurs substituants identiques ou différents fluoro et/ou chloro ; ou représente un groupe N-phénylcarbonyl-N-méthylsulfonylamino, un groupe N-phénylcarbonyl-N-éthylsulfonylamino, un groupe N-thiénylcarbonyl-N-méthylsulfonylamino ou un groupe N-thiénylcarbonyl-N-éthylsulfonylamino, chacun de ces groupes portant, le cas échéant, un ou plusieurs substituants identiques ou différents cyano, fluoro, chloro, bromo, méthyle, éthyle, n- ou i-propyle, n-, i,- s- ou t-butyle, trifluorométhyle, méthoxy, éthoxy, n- ou i-propoxy, difluorométhoxy ou trifluorométhoxy,
à l'exception de la substance active 2-(2,4-dichloro-5-méthylsulfonylaminophényl)-4-difluorométhyl-5-méthyl-2,4-dihydro-3H-1,2,4-triazol-3-one (Sulfentrazone)
("substances actives du groupe 1") et
(b) au moins une N-arylsulfonylamino(thio)-carbonyl-triazolin(thi)one répondant à la formule générale (II) dans laquelle
Q² et Q³ représentent respectivement un atome d'oxygène ou un atome de soufre,
R⁶ représente un groupe méthyle, un groupe éthyle, un groupe méthoxy ou un groupe éthoxy, chacun de ces groupes portant, le cas échéant, un ou plusieurs substituants identiques ou différents fluoro, chloro, méthoxy ou éthoxy ; ou représente un groupe cyclopropyle,
R⁷ représente un atome de chlore, un atome de brome ; un groupe méthyle, un groupe éthyle, un groupe n- ou i-propyle, un groupe méthoxy, un groupe éthoxy, un groupe n- ou i-propoxy, un groupe méthylthio, un groupe éthylthio, un groupe n- ou i-propylthio, un groupe méthylamino, un groupe éthylamino, un groupe n- ou i-propylamino, chacun de ces groupes portant, le cas échéant, un ou plusieurs substituants identiques ou différents fluoro, chloro, méthoxy ou éthoxy ; un groupe diméthylamino, un groupe propénylthio, un groupe propynylthio ou représente un groupe cyclopropyle,
R⁸ représente un atome de fluor, un atome de chlore, un atome de brome ; un groupe méthyle, un groupe éthyle, un groupe n- ou i-propyle, un groupe méthoxy, un groupe éthoxy, un groupe n- ou i-propoxy, un groupe méthoxycarbonyle, un groupe éthoxycarbonyle, un groupe n- ou i-propoxycarbonyle, un groupe méthylthio, un groupe éthylthio, un groupe n- ou i-propylthio, un groupe méthylsulfinyle, un groupe éthylsulfinyle, un groupe n- ou i-propylsulfinyle, un groupe méthylsulfonyle, un groupe éthylsulfonyle, un groupe n- ou i-propylsulfonyle, un groupe méthylamino, un groupe éthylamino, un groupe n- ou i-propylamino, chacun de ces groupes portant, le cas échéant, un ou plusieurs substituants identiques ou différents fluoro, chloro, méthoxy ou éthoxy ; ou représente un groupe cyclopropyle,
R⁹ représente un atome d'hydrogène, un groupe nitro, un groupe cyano, un atome de fluor, un atome de chlore, un atome de brome ; un groupe méthyle, un groupe éthyle, un groupe n- ou i-propyle, un groupe méthoxy, un groupe éthoxy, un groupe n- ou i-propoxy, un groupe méthoxycarbonyle, un groupe éthoxycarbonyle, un groupe n- ou i-propoxycarbonyle, un groupe méthylthio, un groupe éthylthio, un groupe n-ou i-propylthio, un groupe méthylsulfinyle, un groupe éthylsulfinyle, un groupe n- ou i-propylsulfinyle, un groupe méthylsulfonyle, un groupe éthylsulfonyle, un groupe n- ou i-propylsulfonyle, chacun de ces groupes portant, le cas échéant, un ou plusieurs substituants identiques ou différents fluoro, chloro, méthoxy ou éthoxy ; ou représente un groupe cyclopropyle,
et/ou un sel d'un composé répondant à la formule (II)
("substances actives du groupe 2").

4. Procédé pour la préparation d'un agent herbicide selon l'une quelconque des revendications 1 à 3, **caractérisé par** le fait de mélanger au moins une substance active du groupe 1 avec au moins une substance active du groupe 2 et au moins un diluant, le cas échéant, en utilisant au moins un agent tensioactif.

5. Utilisation d'un agent herbicide selon l'une quelconque des revendications 1 à 3, pour lutter contre des plantes non désirées.
